# EUROPEAN PATENT APPLICATION

(11) **EP 4 804 581 A1**
(43) Date of publication of application: **09.09.2026**
(21) Application number: 24895928.0
(22) Date of filing: 20.09.2024
(51) Int. Cl.: H04W 12/02

(54) **COMMUNICATION METHOD AND RELATED APPARATUS**

(30) Priority: 29.11.2023 CN 202311626414
(71) Applicant: Huawei Technologies Co., Ltd., Shenzhen, Guangdong 518129 (CN)
(72) Inventor: SUN, Li, Shenzhen, Guangdong 518129 (CN); WANG, Yuwei, Shenzhen, Guangdong 518129 (CN); WANG, Wenhui, Shenzhen, Guangdong 518129 (CN); LIU, Peng, Shenzhen, Guangdong 518129 (CN); WEI, Lai, Shenzhen, Guangdong 518129 (CN); CHEN, Lei, Shenzhen, Guangdong 518129 (CN)
(74) Representative: Goddar, Heinz J.
(86) International application number: PCT/CN2024/119940
(87) International publication number: WO 2025/112830

(57) **Abstract**

This application provides a communication method and a related apparatus to protect user privacy in sensing scenarios. The method includes: a first apparatus and a second apparatus determine a type of a target obfuscation function corresponding to a first sensing scenario and a parameter included in the target obfuscation function; the first apparatus generates a first signal and a second signal, where the second signal is obtained by applying the target obfuscation function to perform phase adjustment on the first signal and the target obfuscation function is determined based on the type of the target obfuscation function and the parameter; the first apparatus outputs the first signal and the second signal, sends first information through a first antenna corresponding to the first apparatus, and sends the second signal through a second antenna corresponding to the first apparatus; and correspondingly, the second apparatus receives signals from the first apparatus and obtains a sensing result based on the received signals and the target obfuscation function.

## Description

This application claims priority to Chinese Patent Application No. 202311626414.0, filed with the China National Intellectual Property Administration on November 29, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Sensing involves measuring a channel using a radio signal, and inferring, based on the measurement result (for example, channel state information (channel state information, CSI) or a channel impulse response (channel impulse response, CIR)), information related to an environment or an object in the environment. Generally, sensing signals used in wireless systems have public structures, potentially exposing privacy. For example, unauthorized users can eavesdrop on and measuring these signals to sense the physical environment, inferring user locations, behavior patterns, and the like.

Therefore, a sensing protection technology is urgently needed to protect user privacy.

### SUMMARY

This application provides a communication method and a related apparatus to protect user privacy in sensing scenarios.

According to a first aspect, this application provides a communication method, and the method may be applied to a first apparatus. For example, the first apparatus may be a terminal or a network device, or may be a component (for example, a chip, a chip system, or a circuit) configured in the terminal or the network device, or may be a logical module or software that can implement all or some functions of the terminal or the network device. This is not limited in this application.

The method includes: determining a type of a target obfuscation function corresponding to a first sensing scenario and a parameter included in the target obfuscation function; generating a first signal and a second signal, where the second signal is obtained by applying the target obfuscation function to perform phase adjustment on the first signal, and the target obfuscation function is determined based on the type of the target obfuscation function and the parameter; and outputting the first signal and the second signal, where the first signal is sent through a first antenna corresponding to the first apparatus, and the second signal is sent through a second antenna corresponding to the first apparatus.

In a possible implementation, the first sensing scenario is one of the following sensing scenarios: a physiological feature detection scenario, a biological presence detection scenario, and an activity recognition scenario, where the physiological feature detection scenario is a scenario for detecting a physiological feature parameter, the biological presence detection scenario is a scenario for detecting whether a biological entity is present in an environment, and the activity recognition scenario is a scenario for detecting a biological activity.

In a possible implementation, the type of the target obfuscation function is one of a plurality of random functions: a sine function, a linear combination of sine functions, a double sine function, a linear combination of two groups of sine functions, or a function obtained by interpolating S random numbers based on an interpolation algorithm, where S is an integer greater than 1.

For example, a ratio of the first signal to the second signal is proportional to *e^{jθ(t)}*, or a ratio of the first signal to the second signal is inversely proportional to *e^{jθ(t)},* and *θ*(*t*) is the target obfuscation function.

Based on the foregoing technical content, the first apparatus pre-determines, by using a type of an obfuscation function corresponding to the sensing scenario and a parameter included in the obfuscation function, the target obfuscation function corresponding to the sensing scenario, and then sends, to a second apparatus, a plurality of signals processed by using the target function, so that a receiver obtains a sensing result based on the received signals and the determined target obfuscation function. Because the type of the obfuscation function and the parameter included in the obfuscation function are shared only between authorized receiving and sending parties (for example, the second apparatus and the first apparatus in this application), only the authorized receiving and sending parties can obtain an accurate sensing result. However, the obfuscation function is unknown to an unauthorized device, and therefore, the unauthorized device cannot perform accurate estimation, and cannot obtain information related to a user. In this way, user privacy is protected.

According to a second aspect, this application provides a communication method, and the method may be applied to a second apparatus. For example, the second apparatus may be a terminal or a network device, or may be a component (for example, a chip, a chip system, or a circuit) configured in the terminal or the network device, or may be a logical module or software that can implement all or some functions of the terminal or the network device. This is not limited in this application.

The method includes: determining a type of a target obfuscation function corresponding to a first sensing scenario and a parameter included in the target obfuscation function; and obtaining a sensing result based on the target obfuscation function and a signal received from a first apparatus, where the target obfuscation function is determined based on the type of the target obfuscation function and the parameter.

Based on the foregoing technical content, the second apparatus pre-determines, by using a type of an obfuscation function corresponding to the sensing scenario and a parameter included in the obfuscation function, the target obfuscation function corresponding to the sensing scenario, so that after receiving a plurality of signals processed by using the target obfuscation function from the first apparatus, the second apparatus can obtain the sensing result based on the received signals and the pre-determined target obfuscation function. Because the type of the obfuscation function and the parameter included in the obfuscation function are shared only between authorized receiving and sending parties (for example, the second apparatus and the first apparatus in this application), only the authorized receiving and sending parties can obtain an accurate sensing result. However, the obfuscation function is unknown to an unauthorized device, and therefore, the unauthorized device cannot perform accurate estimation, and cannot obtain information related to a user. In this way, user privacy is protected.

For descriptions of the first sensing scenario and the type of the target obfuscation function, refer to the descriptions in the first aspect. Details are not described herein again.

For example, the obtaining the sensing result based on the target obfuscation function and the signal received from the first apparatus includes: performing channel estimation based on the target obfuscation function and the signal received from the first apparatus to obtain channel state information; and obtaining the sensing result based on the channel state information.

For example, the first sensing scenario is a physiological feature detection scenario, and the sensing result may be a physiological feature parameter, for example, a heart rate or a respiration rate; the first sensing scenario is a biological presence detection scenario, and the sensing result may be that a biological entity is present in an environment or no biological entity is present in an environment; and the first sensing scenario is an activity recognition scenario, and the sensing result may be an activity type of a biological entity in an environment.

With reference to the first aspect (or the second aspect), in some possible implementations, after the determining the type of the target obfuscation function corresponding to the first sensing scenario and the parameter included in the target obfuscation function, the method further includes: sending first information, where the first information indicates the type of the target obfuscation function.

Correspondingly, with reference to the second aspect (or the first aspect), in some possible implementations, the method further includes: receiving the first information, where the first information indicates the type of the target obfuscation function.

For descriptions of the target obfuscation function, refer to the foregoing descriptions in the first aspect. Details are not described herein again.

With reference to the first aspect (or the second aspect), in some possible implementations, before the determining the type of the target obfuscation function corresponding to the first sensing scenario and the parameter included in the target obfuscation function, the method further includes: receiving first information, where the first information indicates the type of the target obfuscation function.

Correspondingly, with reference to the second aspect (or the first aspect), in some possible implementations, the method further includes: sending the first information, where the first information indicates the type of the target obfuscation function.

Based on this method, the first apparatus and the second apparatus may obtain the type of the target obfuscation function corresponding to the first sensing scenario, to determine the target obfuscation function based on the obtained type of the target obfuscation function and the parameter included in the target obfuscation function, so as to implement channel estimation and sensing.

With reference to the first aspect (or the second aspect), in some possible implementations, after the determining the type of the target obfuscation function corresponding to the first sensing scenario and the parameter included in the target obfuscation function, the method further includes: sending second information, where the second information indicates the parameter included in the target obfuscation function.

Correspondingly, with reference to the second aspect (or the first aspect), in some possible implementations, the method further includes: receiving the second information, where the second information indicates the parameter included in the target obfuscation function.

With reference to the first aspect (or the second aspect), in some possible implementations, before the determining the type of the target obfuscation function corresponding to the first sensing scenario and the parameter included in the target obfuscation function, the method further includes: receiving second information, where the second information indicates the parameter included in the target obfuscation function.

Correspondingly, with reference to the second aspect (or the first aspect), in some possible implementations, the method further includes: sending second information, where the second information indicates the parameter included in the target obfuscation function.

Based on this method, the first apparatus and the second apparatus may obtain the parameter included in the target obfuscation function corresponding to the first sensing scenario, to determine the target obfuscation function based on the obtained type of the target obfuscation function and the parameter included in the target obfuscation function, so as to implement channel estimation and sensing.

With reference to the first aspect (or the second aspect), in some possible implementations, after the determining the type of the target obfuscation function corresponding to the first sensing scenario and the parameter included in the target obfuscation function, the method further includes: sending third information, where the third information indicates a generation algorithm for the parameter.

Correspondingly, with reference to the second aspect (or the first aspect), in some possible implementations, the method further includes: receiving the third information, where the third information indicates the generation algorithm for the parameter.

With reference to the first aspect (or the second aspect), in some possible implementations, before the determining the type of the target obfuscation function corresponding to the first sensing scenario and the parameter included in the target obfuscation function, the method further includes: receiving third information, where the third information indicates a generation algorithm for the parameter.

Correspondingly, with reference to the second aspect (or the first aspect), in some possible implementations, the method further includes: sending the third information, where the third information indicates the generation algorithm for the parameter.

Similar to sending the second information, based on this method, the first apparatus and the second apparatus may obtain the generation algorithm for the parameter included in the target obfuscation function corresponding to the first sensing scenario, to determine, based on the obtained generation algorithm for the parameter, the parameter included in the target obfuscation function, and further determine the target obfuscation function based on the type of the target obfuscation function and the parameter included in the target obfuscation function, so as to implement channel estimation and sensing.

Optionally, before the determining the type of the target obfuscation function corresponding to the first sensing scenario and the parameter included in the target obfuscation function, the method further includes: determining that the scenario to be sensed is the first sensing scenario.

With reference to the first aspect (or the second aspect), in some possible implementations, after the determining that the scenario to be sensed is the first sensing scenario, the method further includes: sending fourth information, where the fourth information indicates that the scenario to be sensed is the first sensing scenario.

Correspondingly, with reference to the second aspect (or the first aspect), in some possible implementations, the method further includes: receiving the fourth information, where the fourth information indicates that the scenario to be sensed is the first field sensing scenario.

With reference to the first aspect (or the second aspect), in some possible implementations, before the determining that the scenario to be sensed is the first sensing scenario, the method further includes: receiving fourth information, where the fourth information indicates that the scenario to be sensed is the first sensing scenario.

Correspondingly, with reference to the second aspect (or the first aspect), in some possible implementations, the method further includes: sending the fourth information, where the fourth information indicates that the scenario to be sensed is the first field sensing scenario.

Based on this method, the first apparatus and the second apparatus exchange the fourth information, so that an apparatus configured to provide a sensing service can determine a current sensing scenario, and further determine a corresponding sensing algorithm based on the obtained sensing scenario, thereby implementing sensing.

The method according to the first aspect and the second aspect includes one or more of the following possible implementations:

In some possible implementations, the first sensing scenario is the physiological feature detection scenario, the function type of the target obfuscation function is the sine function, the parameter includes a frequency of the sine function, and the frequency of the sine function is within a frequency range corresponding to a physiological activity.

Optionally, the parameter further includes an amplitude and/or a phase of the sine function.

For example, the frequency range corresponding to the physiological activity may include a frequency range corresponding to respiration, a frequency range corresponding to heartbeat, or a frequency range corresponding to another physiological activity.

For example, when the type of the target obfuscation function is the sine function, the target obfuscation function *θ*(*t*) satisfies: $θ \left(t\right) = A cos \left(2{πF}_{q}t+φ\right) ,$ where
*F_{q} ∈* [*F*_{*l*1},*F*_{*l*2}], [*F*_{*l*1},*F*_{*l*2}] represents the frequency range corresponding to the physiological activity, *F_{q}* is a frequency value randomly selected from the frequency range [*F*_{*l*1},*F*_{*l*2}], and *φ* is a real number.

Optionally, the amplitude A may be equal to π.

Optionally, an initial phase φ may be equal to 0.

When A=π and φ=0, the target obfuscation function *θ*(*t*) satisfies: *θ*(*t*) = *π*cos2*πF_{q}t.*

In some possible implementations, the first sensing scenario is the physiological feature detection scenario, the type of the target obfuscation function is the linear combination of sine functions, the parameter includes a frequency of each sine function in the linear combination of sine functions and a quantity of sine functions included in the linear combination of sine functions, and the frequency of each sine function is within a frequency range corresponding to a physiological activity.

Optionally, the parameter further includes an amplitude and/or a phase of at least one sine function in the linear combination of sine functions.

It may be understood that, in a plurality of sine functions in the linear combination of sine functions, frequencies of any two sine functions may be the same or different, amplitudes of any two sine functions may be the same or different, or phases of any two sine functions may be the same or different.

For descriptions of the frequency range corresponding to the physiological activity, refer to the foregoing descriptions. Details are not described herein again.

For example, when the type of the target obfuscation function is the linear combination of sine functions, the target obfuscation function *θ*(*t*) satisfies: $θ \left(t\right) = {\sum }_{i = 1}^{{n}_{a}} {q}_{{F}_{qi}} cos \left(2{πF}_{qi}t+{φ}_{i}\right) ,$ where
*F_{qi}* ∈ [*F*_{*l*1},*F*_{*l*2}], [*F*_{*l*1},*F*_{*l*2}] represents the frequency range corresponding to the physiological activity, *F_{qi}* is a frequency value randomly selected from the frequency range [*F*_{*l*1},*F*_{*l*2}], *q_{F_{qi}}* is a non-zero real number, *nₐ* is an integer greater than 1, and *φᵢ* is a real number.

It may be understood that initial phases of any two of the foregoing *nₐ* sine functions may be the same or different.

For example, when the initial phases of the *nₐ* sine functions are all 0, the target obfuscation function *θ*(*t*) satisfies: $θ \left(t\right) = {\sum }_{i = 1}^{{n}_{a}} {q}_{{F}_{qi}} cos \left(2{πF}_{qi}t\right)$.

It may be further understood that amplitudes of any two sine functions of the foregoing *nₐ* sine functions may be the same or different.

In some possible implementations, the first sensing scenario is the biological presence detection scenario, the type of the target obfuscation function is the double sine function, the double sine function includes a first sine function and a second sine function, the parameter includes a frequency of the first sine function and a frequency of the second sine function, the frequency of the first sine function is within a frequency range corresponding to respiration, and the frequency of the second sine function is within a frequency range corresponding to heartbeat.

The double sine function is a linear combination of two sine functions with different frequencies, and the frequencies of the two sine functions respectively belong to frequency ranges corresponding to different physiological features.

Optionally, the parameter further includes one or more of the following: an amplitude of the first sine function, a phase of the first sine function, an amplitude of the second sine function, or a phase of the second sine function.

It may be understood that, if the biological presence detection scenario further includes detection of another physiological feature, the double sine function may be replaced with a triple sine function, where the triple sine function includes the first sine function, the second sine function, and a third sine function, and a frequency of the third sine function is a frequency range corresponding to the another physiological feature. The third sine function may include at least one sine function, and a frequency of the at least one sine function is within a frequency range corresponding to different physiological features.

For example, when the target obfuscation is the double sine function, the target obfuscation function *θ*(*t*) satisfies: $θ \left(t\right) = {q}_{{F}_{a 1}} cos \left(2{πF}_{a 1}t+{φ}_{1}\right) + {q}_{{F}_{b 1}} cos \left(2{πF}_{b 1}t+{φ}_{2}\right) ,$ where
*F*_{*a*1} E [*F*_{*m*1},*F*_{*m*2}], [*F*_{*m*1},*F*_{*m*2}] represents the frequency range corresponding to respiration, *F*_{*a*1} is a frequency value randomly selected from the frequency range [*F*_{*m*1},*F*_{*m*2}], *F*_{*b*1} ∈ [*F*_{*n*1},*F*_{*n*2}], [*F*ₙ₁,*F*_{*n*2}] represents the frequency range corresponding to heartbeat, *F*_{*b*1} is a frequency value randomly selected from the frequency range [*F*_{*n*1},*F*_{*n*2}], both *q*_{*F*ₐ₁} and *q*_{*F*_{b1}} are non-zero real numbers, and both *φ*₁ and *φ*₂ are real numbers.

It may be understood that, in the double sine function, initial phases of the two sine functions may be the same or different.

For example, when the initial phases of the two sine functions in the double sine function are both 0, the target obfuscation function *θ*(*t*) satisfies: *θ*(*t*) *= q*_{*F*ₐ₁} cos2*πF*_{*a*1}*t + q*_{*F*_{b1}} cos2*πF*_{*b*1}*t*.

It may be further understood that, in the double sine function, amplitudes of the two sine functions may be the same or different.

In some possible implementations, the first sensing scenario is the biological presence detection scenario, the type of the target obfuscation function is the linear combination of two groups of sine functions, and the parameter includes a frequency of each sine function in the linear combination of two groups of sine functions and a quantity of sine functions included in each group of sine functions; and the linear combination of two groups of sine functions includes a first group of sine functions and a second group of sine functions, a frequency of each sine function in the first group of sine functions is within a frequency range corresponding to respiration, and a frequency of each sine function in the second group of sine functions is within a frequency range corresponding to heartbeat.

Optionally, the parameter further includes an amplitude and/or a phase of each sine function.

Similar to the foregoing double sine function, the linear combination of two groups of sine functions is a linear combination of two groups of sine functions in different frequency ranges. Similarly, if the biological presence detection scenario further includes detection of another physiological feature, the two groups of sine functions may be further extended to a linear combination of more groups of sine functions, where frequencies of different groups of sine functions in the linear combination of more groups of sine functions respectively belong to frequency ranges corresponding to different physiological features.

For example, when the target obfuscation function is the linear combination of two groups of sine functions, the target obfuscation function *θ*(*t*) satisfies: $θ \left(t\right) = {\sum }_{i = 1}^{{n}_{a}} {q}_{{F}_{ai}} cos \left(2{πF}_{ai}t+{φ}_{ai}\right) + {\sum }_{i = 1}^{{n}_{b}} {q}_{{F}_{bi}} cos \left(2{πF}_{bi}t+{φ}_{bi}\right) ,$ where
*Fₐᵢ* ∈ [*F*_{*m*1},*F*_{*m*2}], [*F*_{*m*1},*F*_{*m*2}] represents the frequency range corresponding to respiration, *Fₐᵢ* is a frequency value randomly selected from [*F*_{*m*1},*F*_{*m*2}], *F_{bi}* ∈ [*F*_{*n*1},*F*_{*n*2}], [*F*_{*n*1},*F*_{*n*2}] represents the frequency range corresponding to heartbeat, *F_{bi}* is a frequency value randomly selected from the frequency range [*F*_{*n*1},*F*_{*n*2}], both *q_{Fₐᵢ}* and *q_{F_{bi}}* are non-zero real numbers, both *nₐ* and *n_{b}* are integers greater than 1, and both *φₐᵢ* and *φ_{bi}* are real numbers.

It may be understood that, in (*nₐ + n_{b}*) sine functions included in the foregoing linear combination of two groups of sine functions, initial phases of any two sine functions may be the same or different.

For example, when the initial phases of the (*nₐ + n_{b}*) sine functions are all 0, the target obfuscation function *θ*(*t*) satisfies: $θ \left(t\right) = {\sum }_{i = 1}^{{n}_{a}} {q}_{{F}_{ai}} cos \left(2{πF}_{ai}t\right) + {\sum }_{i = 1}^{{n}_{b}} {q}_{{F}_{bi}} cos \left(2{πF}_{bi}t\right)$.

It may be further understood that, in the (*nₐ + n_{b}*) sine functions included in the foregoing linear combination of two groups of sine functions, amplitudes of any two sine functions may be the same or different.

In some possible implementations, the first sensing scenario is the activity recognition scenario, the type of the target obfuscation function is the function obtained by interpolating the S random numbers based on the interpolation algorithm, the parameter is the S random numbers, and S is an integer greater than 1.

The interpolation algorithm includes a cubic Hermite (Hermite) interpolation algorithm, or another type of interpolation algorithm. This is not limited in this application.

For example, S satisfies: $\frac{\left(M-1\right) Δ t}{S - 1} = \frac{1}{{αF}_{max}} ,$ where
*F*ₘₐₓ is a maximum value of maximum Doppler frequency shifts caused by all actions to be recognized, a value of *F*ₘₐₓ is determined based on a sensing scenario and a carrier frequency, M is a quantity of sensing rounds, Δ*t* is a duration of each sensing round, α is a number greater than 0 and less than 1, and M is an integer greater than 1.

In some possible implementations, the method further includes: obtaining the target obfuscation function based on the type of the target obfuscation function and the parameter.

For example, a function form of the target obfuscation function may be obtained based on the type of the target obfuscation function; and a parameter in the function form other than an independent variable and a dependent variable may be determined based on the parameter, so that the target obfuscation function can be obtained.

According to a third aspect, this application provides a communication apparatus. The communication apparatus may be used in the first apparatus in the first aspect, or the communication apparatus may be used in the second apparatus in the second aspect. The communication apparatus includes modules or units configured to implement the method in any one of the foregoing aspects and the possible implementations of the foregoing aspects. The module or unit may be a hardware circuit, or may be software, or may be implemented by a hardware circuit in combination with software. For example, each module or unit may implement a corresponding function by executing a computer program.

According to a fourth aspect, this application provides a communication apparatus, including a processor. The processor is configured to perform the method in any one of the foregoing aspects and the possible implementations of the foregoing aspects.

The apparatus may further include a memory configured to store instructions and data. The memory is coupled to the processor. When the processor executes the instructions stored in the memory, the methods described in the foregoing aspects may be implemented.

The apparatus may further include a communication interface. The communication interface is used by the apparatus to communicate with another device. For example, the communication interface may be a transceiver, a circuit, a bus, a module, or another type of communication interface.

According to a fifth aspect, this application provides a chip system. The chip system includes at least one processor, configured to support implementation of functions in any one of the foregoing aspects and the possible implementations of the foregoing aspects, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a sixth aspect, this application provides a computer-readable storage medium, including a computer program. When the computer program is run on a computer, the computer is caused to implement the method in any one of the foregoing aspects and the possible implementations of the foregoing aspects.

According to a seventh aspect, this application provides a computer program product. The computer program product includes a computer program (which may also be referred to as code or instructions), and when the computer program is run, a computer is caused to perform the method in any one of the foregoing aspects and the possible implementations of the foregoing aspects.

According to an eighth aspect, this application provides a communication system, including the foregoing first apparatus and second apparatus. The first apparatus is configured to implement the method in any one of the first aspect and the possible implementations of the first aspect, and the second apparatus is configured to implement the method in any one of the second aspect and the possible implementations of the second aspect.

It should be understood that the third aspect to the eighth aspect of this application correspond to the technical solutions of the first aspect or the second aspect of this application, and that beneficial effect achieved in the aspects and corresponding feasible implementations are similar. Details are not described again.

### BRIEF DESCRIPTION OF DRAWINGS

FIG. 1 is a diagram of an architecture of a communication system applicable to a method according to an embodiment of this application;
FIG. 2 is a diagram of an application scenario applicable to a method according to an embodiment of this application;
FIG. 3 and FIG. 4 are schematic flowcharts of communication methods according to embodiments of this application;
FIG. 5a to FIG. 5f are diagrams of impact of an obfuscation function designed for a physiological feature detection scenario on a sensing result according to this application;
FIG. 6a, FIG. 6b, FIG. 7a, and FIG. 7b are diagrams of impact of obfuscation functions designed for human presence scenarios on sensing results according to this application;
FIG. 8a and FIG. 8b are diagrams in which an impulse with high energy is dispersed over a frequency range according to an embodiment of this application;
FIG. 9a to FIG. 9f are diagrams of impact of an obfuscation function designed for an activity recognition scenario on a sensing result according to an embodiment of this application; and
FIG. 10 and FIG. 11 are block diagrams of apparatuses according to embodiments of this application.

### DESCRIPTION OF EMBODIMENTS

The following describes technical solutions of this application with reference to accompanying drawings.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, the "first apparatus" and the "second apparatus" are merely different devices, and a quantity of devices or a priority relationship is not limited. For another example, the "first signal" and the "second signal" are merely different signals, and there is no time sequence relationship, magnitude relationship, or priority relationship between the two signals.

Second, "sending" and "receiving" in embodiments of this application indicate signal transfer directions. For example, "sending the first information to the second apparatus" may be understood as that a destination end of the information is the second apparatus, and may include direct sending through an air interface, or indirect sending through an air interface by another unit or module. "Receiving the third information from the second apparatus" may be understood as that a source end of the configuration information is the second apparatus, and may include direct receiving from the second apparatus through an air interface, or indirect receiving from the second apparatus through an air interface via another unit or module. The "sending" may also be understood as "outputting" of a chip interface, and the "receiving" may also be understood as "inputting" of a chip interface.

In other words, sending and receiving may be performed between devices, for example, between the first apparatus and the second apparatus; or sending and receiving may be performed inside an apparatus, for example, between components, modules, chips, software modules, or hardware modules inside a device through a bus, a cable, or an interface.

It may be understood that, before the information is sent from the source end to the destination end, necessary processing such as encoding and modulation may be performed. After receiving the information from the source end, the destination end may also perform corresponding processing such as decoding and demodulation, to interpret valid information from the source end. Similar descriptions in this application may be understood similarly, and details are not described again.

Third, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, the "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of pre-agreed information (for example, predefined in a protocol), to reduce indication overheads to some extent. A specific indication manner is not limited in this application.

It may be understood that, for a transmitter of the indication information, the indication information may indicate the to-be-indicated information, and for a receiver of the indication information, the indication information may be for determining the to-be-indicated information.

Fifth, tables in embodiments of this application are merely examples. Values of information in the tables are merely examples, and other values may be configured. This is not limited in this application. The tables do not constitute a limitation on the protection scope of this application. For example, appropriate transformation or adjustment, such as splitting or combination, may be performed based on the foregoing tables. For another example, names of parameters shown in titles of the tables may alternatively be other names that can be understood by communication apparatuses, and values or representation manners of the parameters may alternatively be other values or representation manners that can be understood by the communication apparatuses. For still another example, during implementation of the foregoing tables, another data structure, such as an array, a queue, a container, a stack, a linear table, a pointer, a linked list, a tree, a graph, a structure, a class, a pile, or a hash table, may alternatively be used.

Sixth, in embodiments of this application, descriptions such as "when ...", "in a case that ...", and "if" all mean that a device (for example, the first apparatus or the second apparatus) performs corresponding processing in an objective case, are not intended to limit time, do not require the device to perform a determining action during implementation, and do not mean any other limitation.

Seventh, predefinition in this application may be understood as definition, predefinition, storage, pre-storage, pre-negotiation, pre-configuration, solidifying, or pre-burning.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a 5th generation (5th generation, 5G) mobile communication system, a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a communication system evolved after 5G, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a radio network. The radio access network device may be a node in the radio access network, referred to as a RAN node for short.

In a possible scenario, the RAN node may be a base station (base station, BS), an evolved NodeB (evolved NodeB, eNodeB), a transmission reception point (transmission reception point, TRP), a home evolved NodeB (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation base station in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, an internet of things (internet to things, IoT) communication system, or the like. Alternatively, the RAN node may be a RAN node in a non-terrestrial network (non-terrestrial network, NTN). In other words, the RAN node may be deployed on a high-altitude platform or a satellite. The RAN node may be a macro base station, may be a micro base station or an indoor base station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any one of the CU (or the CU-CP or the CU-UP), the DU, and the RU may be implemented by using a software module, a hardware module, or a combination of a software module and a hardware module. In other words, the radio access network device in this application may be a virtualized device, for example, implemented by using general-purpose hardware and an instantiated virtualization function, or by using dedicated hardware and an instantiated virtualization function. The general-purpose hardware may be a server, for example, a cloud server.

The terminal in this application may also be referred to as user equipment (user equipment, UE), an access terminal, a subscriber unit, a subscriber station, a mobile station, a remote station, a remote terminal, a mobile device, a user terminal, a terminal device, a wireless communication device, a user agent, or a user apparatus.

The terminal may be a device that provides voice/data connectivity for a user, for example, a handheld device or a vehicle-mounted device that has a wireless connection function. Currently, some examples of terminal devices may be: a mobile phone (mobile phone), a tablet (pad), a computer with a wireless transceiver function (for example, a notebook computer or a palmtop computer), a mobile internet device (mobile internet device, MID), a virtual reality (virtual reality, VR) device, an augmented reality (augmented reality, AR) device, a smart point of sale (point of sale, POS) machine, customer-premises equipment (customer-premises equipment, CPE), a wireless terminal in industrial control (industrial control), a wireless terminal in self-driving (self-driving), an uncrewed aerial vehicle, a terminal device in an IoT system, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

The terminal in this application may be a virtualized device, for example, implemented by using general-purpose hardware and an instantiated virtualization function, or by using dedicated hardware and an instantiated virtualization function. The general-purpose hardware may be a server, for example, a cloud server.

It should be understood that both a specific form of the radio access network device and a specific form of the terminal device are not limited in this application.

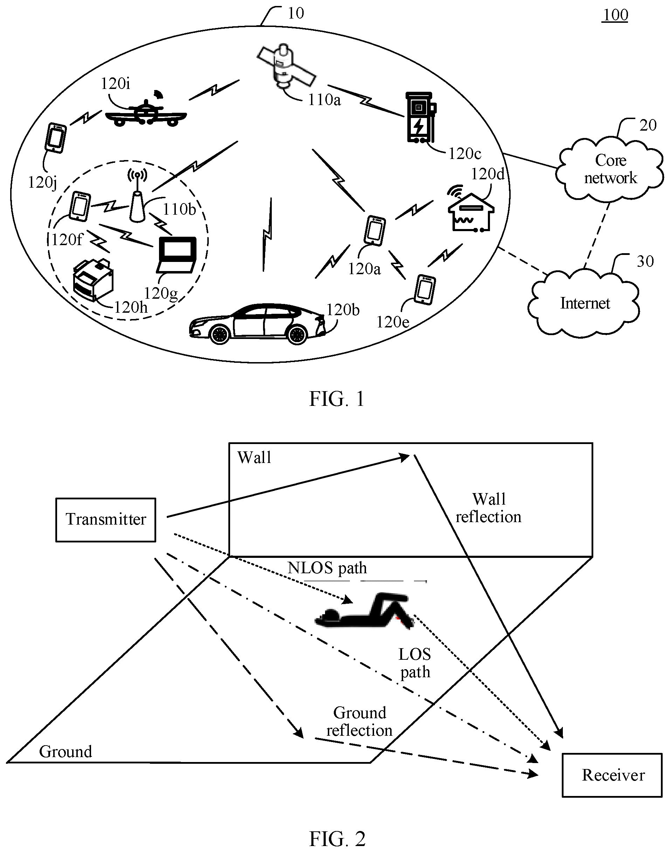

FIG. 1 is a diagram of an architecture of a communication system 100 applicable to a method according to an embodiment of this application. As shown in FIG. 1, the communication system 100 includes a radio access network 10 and a core network 20. Optionally, the communication system 100 may further include an internet 30. The radio access network 10 may include at least one radio access network device (for example, 110a and 110b in FIG. 1), and may further include at least one terminal (for example, 120a to 120j in FIG. 1).

The terminal may be connected to the radio access network device in a wireless manner, and the radio access network device may be connected to the core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device. A wired or wireless manner may be used for a connection between terminals and a connection between radio access network devices.

Communication between a radio access network device and a terminal, between radio access network devices, and between terminals may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The radio access network device may be a base station deployed in the air, for example, may be a satellite base station 110a; or may be a base station deployed indoors, for example, may be a micro base station or indoor base station 110b.

The terminal may be a terminal deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 120g, or a printer 120h in FIG. 1.

The radio access network device and the terminal may be at fixed positions, or may be mobile. For example, the radio access network device and the terminal may be deployed on land, including an indoor device, an outdoor device, a handheld device, or a vehicle-mounted device; or may be deployed on water; or may be deployed on an airplane, a balloon, or an artificial satellite in the air.

Roles of the radio access network device and the terminal may be relative. For example, the helicopter or uncrewed aerial vehicle 120i in FIG. 1 may be configured as a mobile base station. For 120j that accesses the radio access network 10 via 120i, 120i is a base station, while for 110a, 120i is a terminal, that is, 110a and 120i communicate with each other by using a radio air interface protocol. Certainly, 110a and 120i may alternatively communicate with each other according to an interface protocol between radio access network devices. In this case, for 110a, 120i is also a base station. Therefore, both the radio access network device and the terminal may be collectively referred to as a communication device. 110a, 110b, and 120a to 120j in FIG. 1 may be referred to as communication devices having respective corresponding functions, for example, a communication device having a base station function or a communication device having a terminal function.

It should be understood that, FIG. 1 is merely a diagram. The communication system may further include other devices, for example, may further include a wireless relay device and a wireless backhaul device, which are not shown in FIG. 1.

FIG. 2 is a diagram of a sensing scenario applicable to a method according to an embodiment of this application. As shown in FIG. 2, a human in a static state, a wall, a ground, and the like are present in an environment of communication between a transmitter and a receiver. The transmitter transmits a signal to the receiver, where the signal may be transmitted through a line of sight (line of sight, LOS) path or a non-line of sight (non-LOS, NLOS) path, or reflected to the receiver through the wall or the ground. The receiver receives the signal from the transmitter, and performs channel estimation based on the received signal, so that information related to a user or environment information that is present in the environment of communication may be analyzed based on channel state information obtained through measurement.

The receiver and the transmitter shown in FIG. 2 may be the terminal or the access network device shown in FIG. 1. For example, the transmitter is an access network device, and the receiver is a terminal; or the transmitter is a terminal, and the receiver is an access network device.

For ease of understanding, related concepts in embodiments of this application are first described briefly.
1. Sensing: involves obtaining characteristics of signal propagation space from changes in radio signals during propagation, and inferring information related to an environment or a user (for example, a human or an object in the environment) based on the characteristics, for example, performing channel measurement to obtain CSI or CIR and implementing sensing based on the CSI or CIR.
2. Physiological feature detection: involves monitoring of, for example, a respiration rate or a heart rate of a biological entity.
3. Biological presence detection: involves determining whether a biological entity is present in an environment, classified into motion presence detection and static presence detection.
   Static presence detection mainly uses physiological feature information such as respiration and heart rate of a biological entity to determine whether the biological entity is present in the environment. Motion presence detection determines whether a moving target is present based on spectra differences between motion and static states, essentially equivalent to activity detection. This application focuses on static presence detection.
4. Activity detection: involves detection of different activity behaviors of a biological entity in an environment.

Wireless systems commonly use special "measurement" signals (for example, reference signals) for sensing. These signals have public structures. If these signals are used for sensing, all receivers capable of receiving them in a communication system may obtain sensing results. However, some sensing scenarios require only authorized transceivers (to be specific, receivers and transmitters that are authorized to perform sensing measurement) obtain accurate sensing results, while unauthorized users cannot. Using current "measurement" signals risks exposing accurate results to unauthorized users, compromising user privacy.

In view of this, embodiments of this application provide a communication method and a related apparatus. In the method, a transmitter obfuscates sensing signals using an obfuscation function shared with an authorized receiver. The authorized receiver then performs channel estimation based on the pre-shared obfuscation function and the received signals to obtain user information. Since the obfuscation function is unknown to unauthorized devices, they can perform channel estimation based only on the received signals, failing to obtain user information. In this way, user privacy is protected.

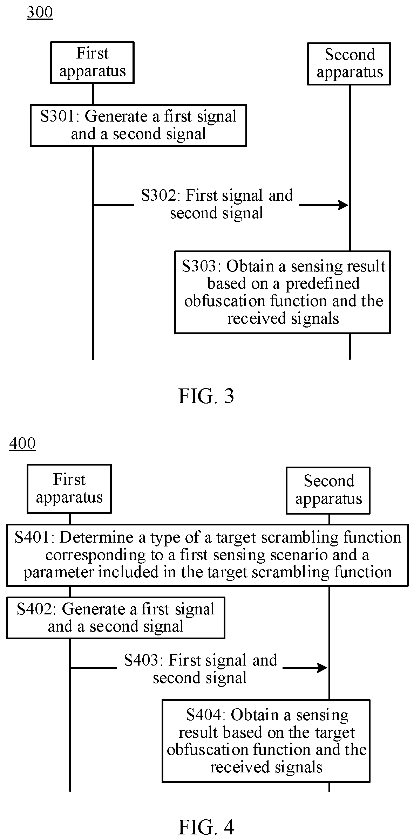

The following describes in detail the communication method provided in embodiments of this application with reference to FIG. 3 and FIG. 4. The method provided in this application may be applied to the network architecture shown in FIG. 1, but embodiments of this application are not limited thereto.

In flowcharts shown in FIG. 3 and FIG. 4, the method is shown from a perspective of interaction between communication apparatuses. However, an execution body of the method is not limited in this application. For example, a first apparatus in FIG. 3 and FIG. 4 may be a terminal device or an access network device, or the first apparatus is a component (for example, a chip, a chip system, or a processor) configured in the terminal device or the access network device, or may be a logical module or software that can implement all or some functions of the first apparatus. A second apparatus in FIG. 3 and FIG. 4 may be a terminal device or an access network device, or the second apparatus is a component (for example, a chip, a chip system, or a processor) configured in the terminal device or the access network device, or may be a logical module or software that can implement all or some functions of the second apparatus.

FIG. 3 is a schematic flowchart of a communication method 300 according to an embodiment of this application. As shown in FIG. 3, the method 300 may include S301 to S303. The following describes in detail the steps in the method 300.

S301: A first apparatus generates a first signal and a second signal. The second signal is obtained by applying a predefined obfuscation function to perform phase adjustment on the first signal.

The preset obfuscation function is a time-varying function with a low-pass feature. The obfuscation function can be used as an encryption parameter and shared between authorized receiving and sending parties. For example, a parameter in the obfuscation function, a sampling value of the obfuscation function, or an information field that indicates a type and a generation manner of the obfuscation function may be encrypted by using an encryption algorithm, so that both the receiving and sending parties can obtain the obfuscation function.

It may be understood that the first apparatus may alternatively generate M (which is an integer greater than or equal to 2) signals, where the M signals include at least two signals that satisfy a relationship between the first signal and the second signal.

S302: The first apparatus outputs the first signal and the second signal. The first signal is sent through a first antenna corresponding to the first apparatus, and the second signal is sent through a second antenna corresponding to the first apparatus.

The first antenna and the second antenna may be antennas deployed on the first apparatus (in other words, the first apparatus includes a radio frequency unit); or the first antenna and the second antenna are antennas corresponding to the first apparatus (in other words, the first apparatus does not include a radio frequency unit).

For example, when no radio frequency unit is deployed on the first apparatus (for example, the first apparatus is a baseband unit), S302 may be replaced with: The first apparatus outputs the first signal and the second signal, sends the first signal through the first antenna corresponding to the first apparatus, and sends the second signal through the second antenna corresponding to the first apparatus.

For example, when a radio frequency unit is deployed on the first apparatus (for example, the first apparatus includes a baseband unit and the radio frequency unit), S302 may be replaced with: The first apparatus sends the first signal through the first antenna included in the first apparatus, and sends the second signal through the second antenna included in the first apparatus.

S303: A second apparatus obtains a sensing result based on the predefined obfuscation function and the received signals.

In this embodiment of this application, the first apparatus sends, to the second apparatus, a plurality of sensing signals that are obfuscated by using the predefined obfuscation function, so that the second apparatus performs channel measurement based on the received signals and the predefined target obfuscation function, to obtain the sensing result. Because the obfuscation function is shared only between the authorized receiving and sending parties (which may be understood as apparatuses configured to provide a sensing service), only the authorized receiving and sending parties can obtain the accurate sensing result and obtain information about a user. However, the obfuscation function is unknown to an unauthorized device, and therefore the unauthorized device cannot obtain accurate channel state information, and cannot obtain the information related to the user. In this way, user privacy is protected.

FIG. 4 is a schematic flowchart of a communication method 400 according to an embodiment of this application. As shown in FIG. 4, the method 400 may include S401 to S404. The following describes in detail the steps in the method 400.

S401: A first apparatus and a second apparatus determine a type of a target obfuscation function corresponding to a first sensing scenario and a parameter included in the target obfuscation function.

The first sensing scenario is a scenario to be sensed. When scenarios to be sensed are different, the first apparatus and the second apparatus determine different types of target obfuscation functions and different parameters. That is, different sensing scenarios correspond to different types of obfuscation functions and different parameters.

The first sensing scenario may be one of the following sensing scenarios: a physiological feature detection scenario, a biological presence detection scenario, and an activity recognition scenario, where the physiological feature detection scenario is a scenario for detecting a physiological feature parameter, the biological presence detection scenario is a scenario for detecting whether a biological entity is present in an environment, the activity recognition scenario is a scenario for detecting a biological activity, and the like. It should be understood that the first sensing scenario may alternatively be another scenario in which sensing needs to be performed.

The type of the target obfuscation function may be one of the following random functions: a sine function, a linear combination of sine functions, a double sine function, a linear combination of two groups of sine functions, a function obtained by interpolating S random numbers based on an interpolation algorithm, and the like, where S is an integer greater than 1.

It may be understood that the parameter included in the target obfuscation function is related to the type of the target obfuscation function. In other words, parameters included in different types of target obfuscation functions may be different. Because the following describes in detail parameters included in different types of obfuscation functions, details are not described herein.

S402: The first apparatus generates a first signal and a second signal. The second signal is obtained by applying the target obfuscation function to perform phase adjustment on the first signal, where the target obfuscation function is determined based on the type of the target obfuscation function and the parameter.

It may be understood that the first apparatus may alternatively generate M signals, where the M signals include at least two signals that satisfy a relationship between the first signal and the second signal, and M is an integer greater than or equal to 2.

S403: The first apparatus outputs the first signal and the second signal. The first signal is sent through a first antenna corresponding to the first apparatus, and the second signal is sent through a second antenna corresponding to the first apparatus.

For this process, refer to the foregoing descriptions of S302. Details are not described herein again.

S404: The second apparatus obtains a sensing result based on the target obfuscation function and the received signals.

Similarly, the second apparatus includes a radio frequency unit or does not include a radio frequency unit.

For example, that the second apparatus obtains the sensing result based on the target obfuscation function and the received signals includes: The second apparatus determines the first signal and the second signal based on the target obfuscation function, performs channel measurement based on the first signal, the second signal, and the received signals to obtain a measurement result, and obtains the sensing result based on the measurement result.

For example, when the second apparatus corresponds to N antennas (or corresponds to N antennas, where N is an integer greater than 0), signals received by the second apparatus are signals separately received through the N antennas. It may be understood that signals received through an i^{th} (a value of i is 1, 2, 3, ..., N) antenna in the N antennas are a signal that is received after the first signal sent by the first apparatus through the first antenna passes through a first channel, and a signal that is received after the second signal sent by the first apparatus through the second antenna passes through a second channel.

The first channel is a channel between the first antenna and the i^{th} antenna, and the second channel is a channel between the second antenna and the i^{th} antenna.

Optionally, after S404, the method 400 further includes: The second apparatus sends the sensing result to the first apparatus. Correspondingly, the first apparatus receives the sensing result.

In this embodiment of this application, the first apparatus and the second apparatus pre-determine, by using a type of an obfuscation function corresponding to the sensing scenario and a parameter included in the obfuscation function, the target obfuscation function corresponding to the sensing scenario. Then, the first apparatus sends, to the second apparatus, a plurality of signals processed by using the target obfuscation function, so that the receiver performs channel measurement based on the received signals and the determined target obfuscation function, to obtain the sensing result. Because the type of the obfuscation function and the parameter included in the obfuscation function are shared only between the first apparatus and the second apparatus, only the authorized receiving and sending parties can obtain correct channel state information, and further obtain the accurate sensing result. However, the obfuscation function is unknown to an unauthorized device, and therefore, the unauthorized device cannot obtain the correct channel state information and cannot obtain information related to a user. In this way, user privacy is protected.

In a possible implementation, a ratio of the first signal to the second signal is proportional to *e*^{*jθ*(*t*)}, or a ratio of the first signal to the second signal is inversely proportional to *e*^{*jθ*(*t*)}, and *θ*(*t*) is the target obfuscation function.

For example, the first signal and the second signal satisfy the following relationship: $\frac{{Q}_{2} \left(t\right)}{{Q}_{1} \left(t\right)} = {ke}^{jθ \left(t\right)}$

*Q*₁(*t*) is the first signal, *Q*₂(*t*) is the second signal, and *k* is a non-zero real number. For example, *k=*1 or *k*=-1.

In a possible implementation, when the first sensing scenario is the physiological feature detection scenario, the type of the target obfuscation function may be the sine function or the linear combination of sine functions; when the first sensing scenario is the biological presence detection scenario, the type of the target obfuscation function is the double sine function or the linear combination of two groups of sine functions; and when the first sensing scenario is the activity recognition scenario, the type of the target obfuscation function is the function obtained by interpolating the S random numbers based on the interpolation algorithm.

In a possible implementation, a same sensing scenario may correspond to a plurality of types of obfuscation functions, and the first apparatus and the second apparatus may determine, through mutual negotiation, the type of the target obfuscation function corresponding to the first sensing scenario.

In a possible implementation, the first apparatus may determine, based on a first mapping relationship, the type of the target obfuscation function corresponding to the first sensing scenario, and send first information to the second apparatus, where the first information indicates the type of the target obfuscation function. Correspondingly, the second apparatus receives the first information, and determines, based on the first information, the type of the target obfuscation function corresponding to the first sensing scenario.

Optionally, after receiving the first information, the second apparatus re-determines, based on the first mapping relationship, a type of the target obfuscation function corresponding to the first sensing scenario, updates the first information based on the re-determined type of the target obfuscation function corresponding to the first sensing scenario, and sends updated first information to the first apparatus. Correspondingly, the first apparatus receives the updated first information, and re-determines, based on the information, the type of the target obfuscation function corresponding to the first sensing scenario.

In a possible implementation, the second apparatus may determine, based on a first mapping relationship, the type of the target obfuscation function corresponding to the first sensing scenario, and send first information to the first apparatus, where the first information indicates the type of the target obfuscation function. Correspondingly, the first apparatus receives the first information, and determines, based on the first information, the type of the target obfuscation function corresponding to the first sensing scenario.

Optionally, after receiving the first information, the first apparatus re-determines, based on the first mapping relationship, a type of the target obfuscation function corresponding to the first sensing scenario, updates the first information based on the re-determined type of the target obfuscation function corresponding to the first sensing scenario, and sends updated first information to the second apparatus. Correspondingly, the second apparatus receives the updated first information, and re-determines, based on the information, the type of the target obfuscation function corresponding to the first sensing scenario.

The first mapping relationship indicates a type of at least one obfuscation function corresponding to each of the plurality of sensing scenarios.

For example, the type of the target obfuscation function may be indicated by an index corresponding to the type of the target obfuscation function. For example, the first information includes the index corresponding to the type of the target obfuscation function.

In this application, transmission of the first information is performed in an encryption manner, and an encryption key is shared only between authorized receiving and sending devices.

It may be understood that the parameter included in the target obfuscation function is related to the type of the target obfuscation function. For example, when the type of the target obfuscation function is the sine function, the parameter includes a frequency of the sine function; when the function type of the target obfuscation function is the linear combination of sine functions, the parameter includes a frequency of each sine function in the linear combination of sine functions and a quantity of sine functions included in the linear combination of sine functions; when the function type of the target obfuscation function is the double sine function, the parameter includes a frequency of each sine function in the double sine function; when the type of the target obfuscation function is the linear combination of two groups of sine functions, the parameter includes a frequency of each sine function in the linear combination of two groups of sine functions, and a quantity of sine functions included in each group of sine functions; and when the type of the target obfuscation function is the function obtained by interpolating the S random numbers based on the interpolation algorithm, the parameter is the S random numbers.

In a possible implementation, after determining the type of the target obfuscation function, the first apparatus and the second apparatus may determine, based on a second mapping relationship, the parameter included in the target obfuscation function corresponding to the first sensing scenario, where the second mapping relationship indicates a group of parameters corresponding to each of the plurality of types of obfuscation functions.

In another possible implementation, after determining the type of the target obfuscation function, the first apparatus determines, based on the type of the target obfuscation function, the parameter included in the target obfuscation function, and sends second information to the second apparatus, where the second information indicates the parameter included in the target obfuscation function. Correspondingly, the second apparatus receives the second information or third information, and determines, based on the second information or the third information, the parameter included in the target obfuscation function.

Optionally, after determining the type of the target obfuscation function, the second apparatus determines, based on the type of the target obfuscation function, the parameter included in the target obfuscation function, and sends the second information to the first apparatus, where the second information indicates the parameter included in the target obfuscation function. Correspondingly, the first apparatus receives the second information or the third information, and determines, based on the second information or the third information, the parameter included in the target obfuscation function.

In still another possible implementation, after determining the type of the target obfuscation function, the first apparatus determines, based on the type of the target obfuscation function, the parameter included in the target obfuscation function, and sends third information to the second apparatus, where the third information indicates a generation algorithm (for example, a linear congruential algorithm or a Mersenne twister algorithm) for the parameter included in the target obfuscation function. Correspondingly, the second apparatus receives the third information, and determines, based on the third information, the parameter included in the target obfuscation function.

Optionally, after determining the type of the target obfuscation function, the second apparatus determines, based on the type of the target obfuscation function, the parameter included in the target obfuscation function, and sends the third information to the first apparatus, where the third information indicates the generation algorithm for the parameter included in the target obfuscation function. Correspondingly, the first apparatus receives the third information, and determines, based on the third information, the parameter included in the target obfuscation function.

Similar to the foregoing descriptions, a same sensing scenario may correspond to a plurality of types of obfuscation functions, and each type of obfuscation function corresponds to a group of parameters. Therefore, when the first apparatus and the second apparatus do not determine the type of the target obfuscation function corresponding to the first sensing scenario, the first apparatus and the second apparatus may determine, through negotiation, the parameter included in the target obfuscation function.

In a possible implementation, the first apparatus may determine, based on a third mapping relationship, the parameter included in the target obfuscation function corresponding to the first sensing scenario, and send second information to the second apparatus. Correspondingly, the second apparatus receives the second information, and determines, based on the second information, the parameter included in the target obfuscation function corresponding to the first sensing scenario.

Optionally, after receiving the second information, the second apparatus re-determines, based on the third mapping relationship, a parameter included in the target obfuscation function corresponding to the first sensing scenario, updates the second information based on the re-determined parameter included in the target obfuscation function corresponding to the first sensing scenario, and sends updated second information to the first apparatus. Correspondingly, the first apparatus receives the updated second information, and re-determines, based on the information, a parameter included in the target obfuscation function corresponding to the first sensing scenario.

In a possible implementation, the second apparatus may determine, based on a third mapping relationship, the parameter included in the target obfuscation function corresponding to the first sensing scenario, and send second information to the first apparatus. Correspondingly, the first apparatus receives the second information, and determines, based on the second information, the parameter included in the target obfuscation function corresponding to the first sensing scenario.

Optionally, after receiving the second information, the first apparatus re-determines, based on the third mapping relationship, a parameter included in the target obfuscation function corresponding to the first sensing scenario, updates the second information based on the re-determined parameter included in the target obfuscation function corresponding to the first sensing scenario, and sends updated second information to the second apparatus. Correspondingly, the second apparatus receives the updated second information, and re-determines, based on the information, the parameter included in the target obfuscation function corresponding to the first sensing scenario.

The third mapping relationship indicates at least one group of parameters corresponding to each of the plurality of sensing scenarios.

In a possible implementation, the first apparatus may determine, based on a fourth mapping relationship, a generation algorithm for the parameter included in the target obfuscation function corresponding to the first sensing scenario, and send third information to the second apparatus. Correspondingly, the second apparatus receives the third information, and determines, based on the third information, the parameter included in the target obfuscation function corresponding to the first sensing scenario.

Optionally, after receiving second information, the second apparatus re-determines, based on the fourth mapping relationship, a generation algorithm for the parameter included in the target obfuscation function corresponding to the first sensing scenario, updates the second information based on a re-determined parameter included in the target obfuscation function corresponding to the first sensing scenario, and sends updated second information to the first apparatus. Correspondingly, the first apparatus receives the updated third information, and re-determines, based on the information, a parameter included in the target obfuscation function corresponding to the first sensing scenario.

In a possible implementation, the second apparatus may determine, based on a fourth mapping relationship, a generation algorithm for the parameter included in the target obfuscation function corresponding to the first sensing scenario, and send third information to the first apparatus. Correspondingly, the first apparatus receives the third information, and determines, based on the third information, the parameter included in the target obfuscation function corresponding to the first sensing scenario.

Optionally, after receiving second information, the first apparatus re-determines, based on the fourth mapping relationship, a generation algorithm for the parameter included in the target obfuscation function corresponding to the first sensing scenario, updates the second information based on a re-determined parameter included in the target obfuscation function corresponding to the first sensing scenario, and sends updated second information to the second apparatus. Correspondingly, the second apparatus receives the updated third information, and re-determines, based on the information, a parameter included in the target obfuscation function corresponding to the first sensing scenario.

The fourth mapping relationship indicates at least one group of generation algorithms corresponding to each of the plurality of sensing scenarios, and each of the at least one group of generation algorithms is used to generate one parameter.

In this application, transmission of the second information and the third information is performed in an encryption manner, and an encryption key is shared only between the authorized receiving and sending devices.

It may be understood that the first information and the second information may be sent at the same time, for example, carried in same signaling. Alternatively, the first information and the second information are separately sent, for example, carried in different signaling. This is not limited in this application.

Similarly, the third information and the first information may be sent at the same time, or the third information and the first information may be separately sent.

Optionally, before S401, the method 400 further includes: The first apparatus and the second apparatus determine that the scenario to be sensed is the first sensing scenario.

The first apparatus and the second apparatus may determine a specific sensing scenario through negotiation.

In a possible implementation, the first apparatus determines that sensing needs to be performed on a physiological feature, and sends fourth information to the second apparatus, where the fourth information indicates that the scenario to be sensed is the physiological feature detection scenario. Correspondingly, the second apparatus determines, based on the fourth information, whether sensing can be performed on the physiological feature.

If the second apparatus can perform sensing on the physiological feature, the second apparatus determines that the scenario to be sensed is the physiological feature detection scenario.

If the second apparatus cannot perform sensing on the physiological feature, the first apparatus may send the fourth information to another apparatus, or continue to send the fourth information to the second apparatus after a period of time.

In another possible implementation, the second apparatus determines that sensing needs to be performed on a physiological feature, and sends fourth information to the first apparatus, where the fourth information indicates that the scenario to be sensed is the physiological feature detection scenario. Correspondingly, the first apparatus determines, based on the fourth information, whether sensing can be performed on the physiological feature.

If the first apparatus can perform sensing on the physiological feature, the first apparatus determines that the scenario to be sensed is the physiological feature detection scenario.

If the first apparatus cannot perform sensing on the physiological feature, the second apparatus may send the fourth information to another apparatus, or continue to send the fourth information to the first apparatus after a period of time.

Optionally, before S402, the method 400 further includes: The first apparatus and the second apparatus obtain the target obfuscation function based on the type of the target obfuscation function and the parameter included in the target obfuscation function.

For example, a function form of the target obfuscation function may be obtained based on the type of the target obfuscation function; and a parameter in the function form other than an independent variable and a dependent variable may be determined based on the parameter included in the target obfuscation function, so that the target obfuscation function can be obtained.

For example, if the type of the target obfuscation function is the sine function, the function form of the target obfuscation function may be determined as: y=Asin(2πfx+φ). The target obfuscation function may be determined after the amplitude A, the frequency f, and the phase φ are known, except for the independent variable x and the dependent variable y.

The following describes a value range of the parameter included in the target obfuscation function corresponding to the first sensing scenario and the corresponding target obfuscation function.

In a possible implementation, when the first sensing scenario is the physiological feature detection scenario, and the type of the target obfuscation function is the sine function, the frequency of the sine function is within a frequency range corresponding to a physiological activity.

The frequency range corresponding to the physiological activity may be represented as [*F*_{*l*1},*F*_{*l*2}] .

For example, the frequency range corresponding to the physiological activity may be a frequency range corresponding to respiration: 0.1 Hz (hertz, Hz) to 0.67 Hz (6 to 40 times/minute), or a frequency range corresponding to heartbeat: 0.83 Hz to 2.5 Hz (50 to 150 times/minute).

When the frequency range corresponding to the physiological activity is the frequency range of respiration, *F*_{*l*1} may be equal to 0.1 (Hz), and *F*_{*l*2} may be equal to 0.67 (Hz). When the frequency range corresponding to the physiological activity is the heart rate range, *F*_{*l*1} may be equal to 0.83 (Hz), and *F*_{*l*2} may be equal to 2.5 (Hz).

For example, the type of the target obfuscation function is the sine function, and the target obfuscation function *θ*(*t*) satisfies: $θ \left(t\right) = A cos \left(2{πF}_{q}t+φ\right)$

*F_{q}* ∈ [*F*_{*l*1},*F*_{*l*2}], *F_{q}* is a frequency value randomly selected from the frequency range [*F*_{*l*1},*F*_{*l*2}], and A is a non-zero real number.

For example, when φ=0, the target obfuscation function *θ*(*t*) satisfies: *θ*(*t*) *= A* cos2*πF_{q}t.*

Optionally, A=π. In this case, an obtained obfuscation function is *θ*(*t*) *= π*cos2*πF_{q}t*, so that strength of a false spectral peak at *F_{q}* is far greater than strength of a true spectral peak. In other words, a feature introduced on a spectrum by a real action (for example, respiration or heartbeat) of a sensed object is masked by a spectrum feature introduced by the obfuscation function, thereby protecting privacy.

It may be understood that, when the type of the target obfuscation function is the sine function, the target obfuscation function determined by the first apparatus and the second apparatus may alternatively be a function obtained by changing at least one of the following in Formula (2): the amplitude, the phase, or the frequency.

In a possible implementation, when the first sensing scenario is the physiological feature detection scenario, and the function type of the target obfuscation function is the linear combination of sine functions, the frequency of each sine function in the linear combination of sine functions is within a frequency range corresponding to a physiological activity.

It may be understood that frequencies of any two sine functions in the linear combination of sine functions may be the same or different.

For descriptions of the frequency range corresponding to the physiological activity, refer to the foregoing descriptions. Details are not described herein again.

For example, the type of the target obfuscation function is the linear combination of sine functions, and the target obfuscation function *θ*(*t*) satisfies: $θ \left(t\right) = {\sum }_{i = 1}^{{n}_{a}} {q}_{{F}_{qi}} cos \left(2{πF}_{qi}t+{φ}_{i}\right)$

*F_{qi}* ∈ [*F*_{*l*1},*F*_{*l*2}], *F_{qi}* may be a frequency value randomly selected from a frequency range [*F*_{*l*1},*F*_{*l*2}], *q_{F_{qi}}* is a non-zero real number, *nₐ* is an integer greater than 1, and *φᵢ* is a real number.

It may be understood that initial phases of any two of the foregoing *nₐ* sine functions may be the same or different. Amplitudes of any two of the foregoing *nₐ* sine functions may be the same or different.

For example, when initial phases of the *nₐ* sine functions are all 0, the target obfuscation function *θ*(*t*) satisfies: $θ \left(t\right) = {\sum }_{i = 1}^{{n}_{a}} {q}_{{F}_{qi}} cos \left(2{πF}_{qi}t\right)$*.*

It may be understood that, when the type of the target obfuscation function is the linear combination of sine functions, the target obfuscation function determined by the first apparatus and the second apparatus may alternatively be a function obtained by changing at least one of the following in Formula (3): an amplitude of at least one sine function in the *nₐ* sine functions, a phase of at least one sine function in the *nₐ* sine functions, or a frequency of at least one sine function in the *nₐ* sine functions.

In a possible implementation, when the first sensing scenario is the biological presence detection scenario, and the function type of the target obfuscation function is the double sine function, the double sine function includes a first sine function and a second sine function. A frequency of the first sine function is within a frequency range corresponding to respiration, and a frequency of the second sine function is within a frequency range corresponding to heartbeat.

The frequency range corresponding to respiration may be represented as [*F*_{*m*1},*F*_{*m*2}], and the frequency range corresponding to heartbeat may be represented as [*F*_{*n*1},F_{*n*2}] .

For the frequency range corresponding to respiration and the frequency range corresponding to heartbeat, refer to the foregoing descriptions. Details are not described herein again. For example, *F*_{*m*1} may be equal to 0.1 (Hz), and *F*_{*m*2} may be equal to 0.67 (Hz); and *F*_{*n*1} may be equal to 0.83 (Hz), and *F*_{*n*2} may be equal to 2.5 (Hz).

For example, the function type of the target obfuscation function is the double sine function, and the target obfuscation function *θ*(*t*) satisfies: $θ \left(t\right) = {q}_{{F}_{a 1}} cos \left(2{πF}_{a 1}t+{φ}_{1}\right) + {q}_{{F}_{b 1}} cos \left(2{πF}_{b 1}t+{φ}_{2}\right)$

*F*_{*a*1} ∈ [*F*_{*m*1},*F*_{*m*2}], *F*_{*a*1} may be a frequency value randomly selected from the frequency range [*F*_{*m*1},*F*_{*m*2}], *F*_{*b*1} ∈ [*F*_{*n*1}, *F*_{*n*2}], *F*_{*b*1} may be a frequency value randomly selected from the frequency range [*F*_{*n*1},*F*_{*n*2}], both *q*_{*F*ₐ₁} and *q*_{*F*_{b1}} are non-zero real numbers, and both *φ*₁ and *φ*₂ are real numbers.

It may be understood that, in the double sine function, initial phases of two sine functions may be the same or different, and amplitudes of the two sine functions may be the same or different.

For example, when the initial phases of the two sine functions in the double sine function are both 0, the target obfuscation function *θ*(*t*) satisfies: *θ*(*t*) *= q*_{*F*ₐ₁} cos2*πF*_{*a*1}*t + q*_{*F*_{b1}} cos2*πF*_{*b*1}*t.*

It may be understood that, when the type of the target obfuscation function is the double sine function, the target obfuscation function determined by the first apparatus and the second apparatus may alternatively be a function obtained by changing at least one of the following in Formula (4): an amplitude of the first sine function, a frequency of the first sine function, a phase of the first sine function, an amplitude of the second sine function, a phase of the second sine function, or a frequency of the second sine function.

In a possible implementation, the first sensing scenario is the biological presence detection scenario, the type of the target obfuscation function is the linear combination of two groups of sine functions, and the linear combination of two groups of sine functions is a linear combination of A first sine functions (the A first sine functions may be referred to as a first group of sine functions) and B second sine functions (the B second sine functions may be referred to as a second group of sine functions). A frequency of each of the A first sine functions is within a frequency range corresponding to respiration, a frequency of each of the B second sine functions is within a frequency range corresponding to heartbeat, and both A and B are integers greater than 0, but A and B cannot be equal to 1 at the same time. When A and B are not 1 at the same time, the determined target obfuscation function may introduce a plurality of false spectral peaks, thereby increasing difficulty for an eavesdropper to make a guess, and achieving a better privacy protection effect.

The frequency range corresponding to respiration may be represented as [*F*_{*m*1},*F*_{*m*2}], and the frequency range corresponding to heartbeat may be represented as [*F*_{*n*1},*F*_{*n*2}] . For example, *F*_{*m*1} may be equal to 0.1 (Hz), and *F*_{*m*2} may be equal to 0.67 (Hz); and *F*_{*n*1} may be equal to 0.83 (Hz), and *F*_{*n*2} may be equal to 2.5 (Hz).

It may be understood that, when A is greater than 1, frequencies of any two sine functions in the A first sine functions may be the same or different; and when B is greater than 1, frequencies of any two sine functions in the B second sine functions may be the same or different.

For example, the type of the target obfuscation function is the linear combination of two groups of sine functions, and the target obfuscation function *θ*(*t*) satisfies: $θ \left(t\right) = {\sum }_{i = 1}^{{n}_{a}} {q}_{{F}_{ai}} cos \left(2{πF}_{ai}t+{φ}_{ai}\right) + {\sum }_{i = 1}^{{n}_{b}} {q}_{{F}_{bi}} cos \left(2{πF}_{bi}t+{φ}_{bi}\right)$

*Fₐᵢ* ∈ [*F*_{*m*1},*F*_{*m*2}], *Fₐᵢ* is a frequency value randomly selected from [*F*_{*m*1},*F*_{*m*2}], *F_{bi}* ∈ [*F*_{*n*1},*F*_{*n*2}], *F_{bi}* is a frequency value randomly selected from the frequency range [*F*_{*n*1},*F*_{*n*2}], both *q_{Fₐᵢ}* and *q_{F_{bi}}* are non-zero real numbers, both *nₐ* and *n_{b}* are integers greater than 1, and both *ϕₐᵢ* and *ϕ_{bi}* are real numbers.

It may be understood that, in (*nₐ+n_{b}*) sine functions included in the foregoing linear combination of two groups of sine functions, initial phases of any two sine functions may be the same or different, and amplitudes of any two sine functions may be the same or different.

For example, when initial phases of the (*nₐ+n_{b}*) sine functions are all 0, the target obfuscation function *θ*(*t*) satisfies: $θ \left(t\right) = {\sum }_{i = 1}^{{n}_{a}} {q}_{{F}_{ai}} cos \left(2{πF}_{ai}t\right) + {\sum }_{i = 1}^{{n}_{b}} {q}_{{F}_{bi}} cos \left(2{πF}_{bi}t\right)$*.*

Similar to Formula (4), when the type of the target obfuscation function is the linear combination of two groups of sine functions, the target obfuscation function determined by the first apparatus and the second apparatus may alternatively be a function obtained by changing at least one of the following in Formula (5): an amplitude of at least one sine function in *nₐ* first sine functions, a frequency of at least one sine function in the *nₐ* first sine functions, a phase of at least one sine function in the *nₐ* first sine functions, an amplitude of at least one sine function in *n_{b}* second sine functions, a phase of at least one sine function in the *n_{b}* second sine functions, or a frequency of at least one sine function in the *n_{b}* second sine functions.

In a possible implementation, when the first sensing scenario is the activity recognition scenario, the target obfuscation function is obtained by interpolating the S random numbers based on the interpolation algorithm. For example, the quantity S of the S random numbers used to determine the target obfuscation function satisfies: $\frac{\left(M-1\right) Δ t}{S - 1} = \frac{1}{{αF}_{max}}$

*Fₘₐₓ* is a maximum value of maximum Doppler frequency shifts caused by all actions to be recognized, *Fₘₐₓ* is determined based on a sensing scenario and a carrier frequency (for example, *Fₘₐₓ* does not exceed hundreds of hertz), M is a quantity of sensing rounds, Δ*t* is a duration of each sensing round, α is a number greater than 0 and less than 1, and M is an integer greater than 1.

It should be understood that functions obtained by interpolating the S random numbers based on different interpolation algorithms may be different.

Because a value of S is related to *Fₘₐₓ*, *Fₘₐₓ* may also be referred to as a parameter included in the target obfuscation function corresponding to the activity recognition scenario. In addition, because target obfuscation functions obtained by using different interpolation algorithms may be different, the interpolation algorithm may also be referred to as a parameter included in the target obfuscation function corresponding to the activity recognition scenario.

For example, correspondences shown in Table 1 may be obtained by combining the foregoing correspondences among the sensing scenarios, the types of the obfuscation function, and the parameters.

**Table 1**

| Type indication | Type meaning | Parameter |
|---|---|---|
| 000 | Scenario 1 (Physiological feature detection scenario)+Sine function | *Fₐ* |
| | *θ*(*t*) = *π*cos2*πF_{q}t* | |
| 001 | Scenario 1 (Physiological feature detection scenario)+Linear combination of sine functions | *Fₐᵢ*, *q_{Fₐᵢ}*, and *nₐ* |
| | $θ \left(t\right) = {\sum }_{i = 1}^{{n}_{a}} {q}_{{F}_{qi}} cos \left(2{πF}_{qi}t\right)$ | |
| 010 | Scenario 2 (Biological presence detection scenario)+Double sine function | *F*_{*a*1}, *F*_{*b*1}, *q*_{*F*ₐ₁}, and *q*_{*F*_{b1}} |
| | *θ*(*t*)*=q*_{*F*ₐ₁} cos2*πF*_{*a*1}*t+q*_{*F*_{b1}} cos2*πF*_{*b*1}*t* | |
| 011 | Scenario 2 (Biological presence detection scenario)+Linear combination of two groups of sine functions | *Fₐᵢ*, *F_{bi}*, *q_{Fₐᵢ}*, and *q_{F_{bi}}* |
| | $θ \left(t\right) = {\sum }_{i = 1}^{{n}_{a}} {q}_{{F}_{ai}} cos \left(2{πF}_{ai}t\right) + {\sum }_{i = 1}^{{n}_{b}} {q}_{{F}_{bi}} cos \left(2{πF}_{bi}t\right)$ | |
| 100 | Scenario 3 (Activity recognition scenario)+Function obtained by interpolating the S random numbers based on the interpolation algorithm | *Fₘₐₓ*, S uniformly distributed random numbers, and interpolation algorithm |

As shown in Table 1, bits shown in the "Type indication" column may indicate different types of obfuscation functions corresponding to different sensing scenarios. For example, "000" indicates that the type of the target obfuscation function corresponding to the first sensing scenario is a sine function, and "001" indicates that the type of the target obfuscation function corresponding to the first sensing scenario is a linear combination of sine functions.

The foregoing method 400 describes the correspondences among sensing scenarios, the obfuscation function types, and the parameters included in the obfuscation function. The following describes design methods for the obfuscation functions corresponding to the three sensing scenarios, using an example where the first apparatus is equipped with two antennas, the second device is equipped with one antenna, and an unauthorized device equipped with two antennas is present in an environment.

In this application, it is assumed that the first apparatus sends signals *Q*₁(*t*) and *Q*₂(*t*) respectively from its two antennas, and the unauthorized device performs sensing based on *Q*₁(*t*) and *Q*₂(*t*) sent by the first apparatus. Signals received on the two antennas of the unauthorized device are *R*₁(*t*) and *R*₂(*t*) respectively, and *R*₁(*t*) and *R*₂(*t*) satisfy: $\begin{matrix}{R}_{1} \left(t\right) = {H}_{t 1 e 1} \left(t\right) {Q}_{1} \left(t\right) + {H}_{t 2 e 1} \left(t\right) {Q}_{2} \left(t\right) \\ {R}_{2} \left(t\right) = {H}_{t 1 e 2} \left(t\right) {Q}_{1} \left(t\right) + {H}_{t 2 e 2} \left(t\right) {Q}_{2} \left(t\right)\end{matrix}$

*Hₜᵢₑⱼ* represents a coefficient of a frequency-domain channel between the i^{th} antenna of a first device and the j^{th} antenna of the unauthorized user, where the value of i is 1 or 2, and the value of j is 1 or 2. *Q*₁(*t*) and *Q*₂(*t*) satisfy: $\frac{{Q}_{2} \left(t\right)}{{Q}_{1} \left(t\right)} = {e}^{jθ \left(t\right)}$*.* In other words, the value of *k* in the foregoing Formula (1) is 1.

Because the relationship that *Q*₁(*t*) and *Q*₂(*t*) satisfy is unknown to the unauthorized device, the unauthorized device cannot independently use a received signal on each antenna to implement channel estimation and sensing. However, the unauthorized device may divide one of the signals received on the two antennas by the other signal to eliminate the impact of an encrypted signal.

For example, the unauthorized device divides *R*₂(*t*) by *R*₁(*t*) to obtain $\frac{{R}_{2} \left(t\right)}{{R}_{1} \left(t\right)} = S \left(t\right)$, where S(t) satisfies: $\begin{matrix}S \left(t\right) & = \frac{{R}_{2} \left(t\right)}{{R}_{1} \left(t\right)} = \frac{{H}_{t 1 e 2} \left(t\right) {Q}_{1} \left(t\right) + {H}_{t 2 e 2} \left(t\right) {Q}_{2} \left(t\right)}{{H}_{t 1 e 1} \left(t\right) {Q}_{1} \left(t\right) + {H}_{t 2 e 1} \left(t\right) {Q}_{2} \left(t\right)} \\ & = \frac{{H}_{t 1 e 2} \left(t\right) {Q}_{1} \left(t\right) \left[1+\frac{{H}_{t 2 e 2} \left(t\right) {Q}_{2} \left(t\right)}{{H}_{t 1 e 2} \left(t\right) {Q}_{1} \left(t\right)}\right]}{{H}_{t 1 e 1} \left(t\right) {Q}_{1} \left(t\right) \left[1+\frac{{H}_{t 2 e 1} \left(t\right) {Q}_{2} \left(t\right)}{{H}_{t 1 e 1} \left(t\right) {Q}_{1} \left(t\right)}\right]} \\ & = \frac{{H}_{t 1 e 2} \left(t\right)}{{H}_{t 1 e 1} \left(t\right)} \frac{1 + \frac{{H}_{t 2 e 2} \left(t\right)}{{H}_{t 1 e 2} \left(t\right)} {e}^{jθ \left(t\right)}}{1 + \frac{{H}_{t 2 e 1} \left(t\right)}{{H}_{t 1 e 1} \left(t\right)} {e}^{jθ \left(t\right)}}\end{matrix}$

If ${Ra}_{1} \left(t\right) = \frac{{H}_{t 1 e 2} \left(t\right)}{{H}_{t 1 e 1} \left(t\right)} , {Ra}_{2} \left(t\right) = \frac{{H}_{t 2 e 2} \left(t\right)}{{H}_{t 1 e 2} \left(t\right)}$, and ${Ra}_{3} \left(t\right) = \frac{{H}_{t 2 e 1} \left(t\right)}{{H}_{t 1 e 1} \left(t\right)}$ are set in Formula (8), the following may be obtained: $S \left(t\right) = {Ra}_{1} \left(t\right) \frac{1 + {Ra}_{2} \left(t\right) {e}^{jθ \left(t\right)}}{1 + {Ra}_{3} \left(t\right) {e}^{jθ \left(t\right)}}$
1. The scenario to be sensed is the physiological feature detection scenario.

In an actual physiological feature detection scenario, *Raᵢ*(*t*) in Formula (9) generally includes a relatively strong direct current component (corresponding to a static environment) and a relatively weak time-varying component (corresponding to channel variations from respiration or heartbeat). That is, *Raᵢ*(*t*)*=cᵢ+gᵢ·ωᵢ*(*t*), and |*cᵢ*| >> |*gᵢ*|, where *cᵢ* represents the direct current component, *gᵢ·ωᵢ*(*t*) represents the time-varying component, and the value of i is 1, 2, or 3.

If *Raᵢ*(*t*) is substituted into Formula (9), the following may be obtained: $S \left(t\right) = \left[{c}_{1}+{g}_{1}⋅{ω}_{1}\left(t\right)\right] \frac{1 + \left[{c}_{2}+{g}_{2}⋅{ω}_{2}\left(t\right)\right] {e}^{jθ \left(t\right)}}{1 + \left[{c}_{3}+{g}_{3}⋅{ω}_{3}\left(t\right)\right] {e}^{jθ \left(t\right)}}$

Because $\left|{c}_{i}\right| ≫ \left|{g}_{i}\right| , S \left(t\right) \approx \left[{c}_{1}+{g}_{1}⋅{ω}_{1}\left(t\right)\right] \frac{1 + {c}_{2} {e}^{jθ \left(t\right)}}{1 + {c}_{3} {e}^{jθ \left(t\right)}}$

If *A*₁(*t*)*=c*₁*+g*₁*·ω*₁(*t*) and ${A}_{2} \left(t\right) = \frac{1 + {c}_{2} {e}^{jθ \left(t\right)}}{1 + {c}_{3} {e}^{jθ \left(t\right)}}$ are set in Formula (11), the following may be obtained: $S \left(t\right) \approx {A}_{1} \left(t\right) ⋅ {A}_{2} \left(t\right)$

The following may be obtained by continuing to perform Fourier transform on Formula (12):${F}_{t}^{S} \left(F\right) = {p}_{0} {F}_{t}^{{A}_{2}} \left(F\right) + {p}_{{F}_{p}} {F}_{t}^{{A}_{2}} \left(F-{F}_{p}\right)$

Because the result of Fourier transform on *A*₁(*t*)*=c*₁*+g*₁*·ω*₁(*t*) is *Fₜ*^{*A*₁}(*F*)*=p*₀*δ*(*F*)*+p_{Fₚ}δ*(*F-Fₚ*), the foregoing Formula (13) may be equivalently replaced with: ${{F}_{t}}^{S} \left(F\right) = {p}_{0} {{F}_{t}}^{{A}_{2}} \left(F\right) + {p}_{{F}_{p}} {{F}_{t}}^{{A}_{2}} \left(F-{F}_{p}\right)$
*p*₀ is a direct current component in A₁(t), *p_{Fₚ}* is a component whose frequency is *p_{Fₚ}* in A₁(t), and *Fₚ* is a true frequency corresponding to a physiological activity to be detected (for example, a frequency corresponding to respiration or heartbeat).

It may be obtained from Formula (14) that a spectral peak corresponding to the function *Fₜ^{S}*(*F*) is *Fₚ*. Therefore, to protect physiological features of a user, selection of the obfuscation function *θ*(*t*) should enable introducing a false spectral peak. In other words, the selected *θ*(*t*) can make F corresponding to a maximum value of the function *Fₜ^{S}*(*F*) not equal to *Fₚ.* That is, the selected *θ*(*t*) can make ${arg max}_{F ∈ \left[{F}_{t 1}, {F}_{t 2}\right]} \left|{{F}_{t}}^{S}\left(F\right)\right| \neq {F}_{p}$ hold.

To introduce false spectral peaks, *θ*(*t*) may be set as a single-frequency function with a frequency of *F_{q}* (for example, *θ*(*t*)*= π*cos2*πF_{q}t*). When *θ*(*t*) *= π*cos2*πF_{q}t* is set, it can be proved that: *A*₂(*t*)*≈z*₀+*Re*^{*jθ*(}*^{t)}.* In this case, *A*₂(*t*) is a periodic function, and the spectrum of *A*₂(*t*) may be approximately: ${{F}_{t}}^{{A}_{2}} \left(F\right) \approx {q}_{0} δ \left(F\right) + {q}_{{F}_{q}} δ \left(F-{F}_{q}\right)$

The following may be obtained by substituting Formula (15) into Formula (14): ${{F}_{t}}^{S} \left(F\right) = {p}_{0} {q}_{0} δ \left(F\right) + {p}_{0} {q}_{{F}_{q}} δ \left(F-{F}_{q}\right) + {p}_{{F}_{p}} {q}_{0} δ \left(F-{F}_{p}\right) + {p}_{{F}_{p}} {q}_{{F}_{q}} δ \left(F-{F}_{p}-{F}_{q}\right)$

Then, based on a Fourier series formula of the periodic function, *q*₀ and q*_{F_{q}}* may be calculated: ${q}_{0} \approx {z}_{0} + {RJ}_{0} \left(π\right) \approx {z}_{0} - 0.304 R and {q}_{{F}_{q}} \approx {jRJ}_{1} \left(π\right) \approx - 0.28 Rj$

*J*₀(*x*) and *J*₁(*x*) are respectively a zero-order Bessel function of the first kind and a first-order Bessel function of the first kind. Based on a mathematical analysis result, and with reference to |*c*₂| ≈ 1, |*c*₃| ≈ 1, and |*c*₃| ≠ |*c*₂| in practice, it may be obtained that |*q*₀| is approximately equivalent to |*q_{F_{q}}*|. In addition, because |*p*₀| >> |*p_{Fₚ}*|, strength of a false spectral peak at *Fₐ* is greater than strength of a true spectral peak at *Fₚ.* In other words, a feature introduced by the true physiological feature (for example, respiration and heartbeat) of the user on a spectrum is masked by a spectrum feature introduced by the obfuscation function, thereby protecting the physiological feature of the user.

In conclusion, the obfuscation function in the physiological feature detection scenario may be: *θ*(*t*) *= π*cos2*πF_{q}t.*

To further enhance the effect of physiological feature protection for users, introducing a plurality of false spectral peaks into [*F*_{*l*1},*F*_{*l*2}] may be considered. For example, a linear combination of several single-frequency functions, for example, $θ \left(t\right) = {\sum }_{i = 1}^{{n}_{a}} {q}_{{F}_{qi}} cos \left(2{πF}_{qi}t\right)$, may be selected as the obfuscation function.

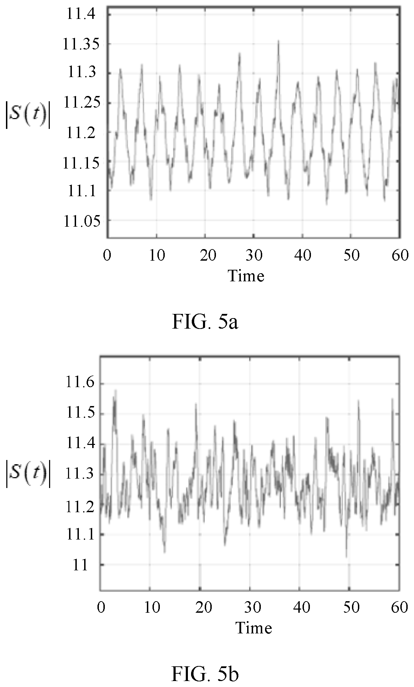

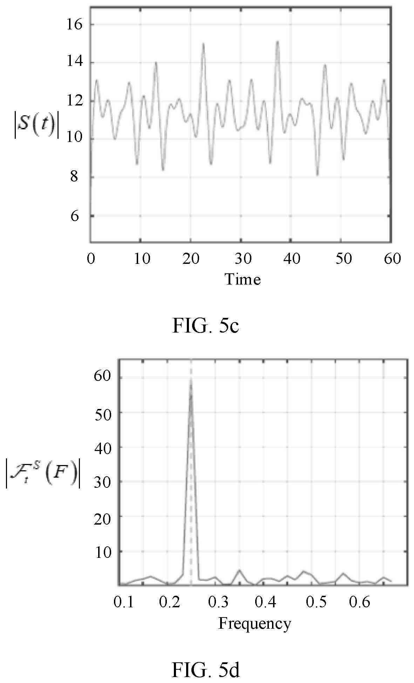

FIG. 5a to FIG. 5f are diagrams of impact of an obfuscation function designed for a physiological feature detection scenario on a sensing result. FIG. 5a and FIG. 5d respectively show a magnitude of a time-domain waveform of S(t) and a magnitude of a spectrum corresponding to S(t) when *θ*(*t*) *=* 0, and *θ*(*t*) *=* 0 means that the first apparatus does not use an obfuscation function to process sensing signals. When *θ*(*t*) = 0, it can be learned from a feature of the magnitude of the spectrum shown in FIG. 5d that the unauthorized device may accurately estimate the 0.25 Hz respiration rate.

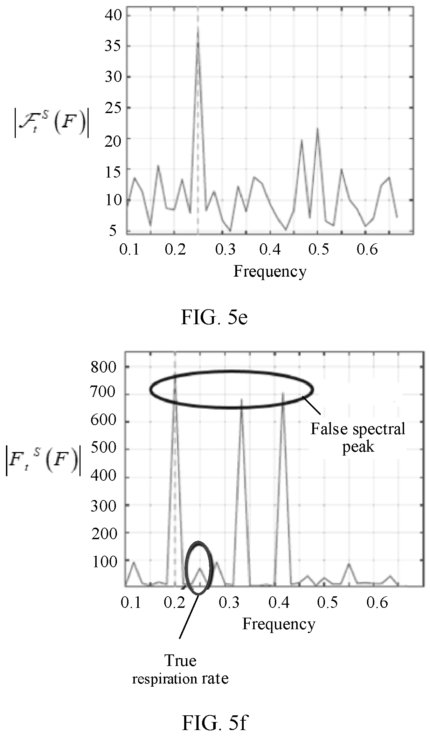

FIG. 5b and FIG. 5e respectively show a magnitude of a time-domain waveform of S(t) and a magnitude of a spectrum corresponding to S(t) when *θ*(*t*) is set to a uniformly distributed random number in (0, 2π). When *θ*(*t*) is set to the uniformly distributed random number in (0, 2π), it can be learned from a feature of the magnitude of the time-domain waveform shown in FIG. 5b that the time-domain waveform of S(t) is obfuscated. However, it can be learned from a feature of the magnitude of the spectrum shown in FIG. 5e that the unauthorized device may still accurately estimate, through frequency-domain analysis, the 0.25 Hz respiration rate.

FIG. 5c and FIG. 5f respectively show a magnitude of a time-domain waveform of S(t) and a magnitude of a spectrum corresponding to S(t) when a permutation function is the obfuscation function $θ \left(t\right) = {\sum }_{i = 1}^{3} {q}_{{F}_{qi}} cos \left(2{πF}_{qi}t\right)$ designed in this application. When $θ \left(t\right) = {\sum }_{i = 1}^{3} {q}_{{F}_{qi}} cos \left(2{πF}_{qi}t\right)$, it can be learned from a feature of the magnitude of the time-domain waveform shown in FIG. 5c that the time-domain waveform of S(t) is obfuscated, and it can be learned from a feature of the magnitude of the spectrum shown in FIG. 5f that when the obfuscation function (*nₐ*=3) designed for this scenario in this application is introduced, three false spectral peaks are introduced, masking a true respiration rate. In addition, the unauthorized device cannot estimate the true respiration rate through frequency-domain analysis.

In conclusion, user information can be protected by using the obfuscation function designed for the physiological feature detection scenario in this application.

2. The scenario to be sensed is the biological presence detection scenario. The following mainly uses human presence detection as an example for description.

In a human presence detection scenario, *Raᵢ*(*t*) in Formula (9) needs to be replaced with: ${Ra}_{i} \left(t\right) = {c}_{i} + {1}_{\left\{presense\right\}} \left({g}_{i 1}⋅{ω}_{i 1}\left(t\right)+{g}_{i 2}⋅{ω}_{i 2}\left(t\right)\right)$

*cᵢ* represents the foregoing direct current component, *g*_{*i*1}·*ω*_{*i*1}(*t*) represents a first time-varying component (corresponding to a slight change in the channel caused by respiration), *gᵢ·ωᵢ*(*t*) represents a second time-varying component (corresponding to a slight change in the channel caused by heartbeat), and ¹_{{*x*}} is an indicator function. When an event described by X is true, a value of the function is 1; or otherwise, when an event described by X is false, a value of the function is 0. Applied to a sensing scenario for detecting whether a human is present, when a human is present, the value of the function is 1; or when no human is present, the value of the function is 0. *ω*_{*i*1}(*t*) and *ω*_{*i*2}(*t*) are channel fluctuation parameter items caused by respiration and heartbeat respectively.

If *Raᵢ*(*t*)*=cᵢ*+1_{{*presense*}}(*g*_{*i*1}*·ω*_{*i*1}(*t*)*+g*_{*i*2}*·ω*_{*i*2}(*t*)) is substituted into Formula (9), updated S(t) may be obtained: $S \left(t\right) = {c}_{1} + {1}_{\left\{presense\right\}} \left({g}_{11}⋅{ω}_{11}\left(t\right)+{g}_{12}⋅{ω}_{12}\left(t\right)\right) \frac{1 + \left[{c}_{2}+{1}_{\left\{presense\right\}}\left({g}_{21}⋅{ω}_{i 1}\left(t\right)+{g}_{22}⋅{ω}_{22}\left(t\right)\right)\right] {e}^{jθ \left(t\right)}}{1 + \left[{c}_{3}+{1}_{\left\{presense\right\}}\left({g}_{31}⋅{ω}_{i 1}\left(t\right)+{g}_{32}⋅{ω}_{32}\left(t\right)\right)\right] {e}^{jθ \left(t\right)}}$

Because $\left|{c}_{i}\right| ≫ \left|{g}_{ij}\right| , S \left(t\right) \approx {c}_{1} + {1}_{\left\{presense\right\}} \left({g}_{11}⋅{ω}_{11}\left(t\right)+{g}_{12}⋅{ω}_{12}\left(t\right)\right) \frac{1 + {c}_{2} {e}^{jθ \left(t\right)}}{1 + {c}_{3} {e}^{jθ \left(t\right)}}$

If *A*₁(*t*)=*c*₁*+*1_{{*presense*}}(*g*₁₁·*ω*₁₁(*t*)*+g*₁₂·*ω*₁₂(*t*)) and ${A}_{2} \left(t\right) = \frac{1 + {c}_{2} {e}^{jθ \left(t\right)}}{1 + {c}_{3} {e}^{jθ \left(t\right)}}$ are set in Formula (18), the foregoing Formula (12) may be obtained.

For a process of obtaining *Fₜ^{S}*(*F*) based on Formula (12), refer to the analysis process of Formula (13) and Formula (14). Details are not described herein.

Similarly, a spectral peak corresponding to *Fₜ^{S}*(*F*) is F_{b}. To ensure that the unauthorized device cannot infer whether a human is present, selection of the obfuscation function *θ*(*t*) should enable introducing a same false spectral peak when the human or no human is present in an environment. In other words, the selected *θ*(*t*) can make F corresponding to a maximum value of the function *Fₜ^{S}*(*F*) equal to *F*_{*a*1} and *F*_{*b*1}. That is, the selected *θ*(*t*) can make ${arg max}_{F ∈ \left[{F}_{m 1}, {F}_{m 2}\right]} \left|{{F}_{t}}^{S}\left(F\right)\right| = {F}_{a}$ and ${arg max}_{F ∈ \left[{F}_{n 1}, {F}_{n 2}\right]} \left|{{F}_{t}}^{S}\left(F\right)\right| = {F}_{b}$ hold regardless of whether a human or no human is present in the environment.

Similar to the analysis in the physiological feature detection scenario, it may be obtained that the obfuscation function for the biological presence detection scenario may be designed as: *θ*(*t*)*=q*_{*F*ₐ₁} cos2*πF*_{*a*1}*t+q*_{*F*_{b1}} cos2*πF*_{*b*1}*t*.

Similar to the foregoing descriptions, to further enhance an effect of protecting user information, a combination of two groups of sine functions, for example, $θ \left(t\right) = {\sum }_{i = 1}^{{n}_{a}} {q}_{{F}_{ai}} cos \left(2{πF}_{ai}t\right) + {\sum }_{i = 1}^{{n}_{b}} {q}_{{F}_{bi}} cos \left(2{πF}_{bi}t\right)$, may be selected as the obfuscation function.

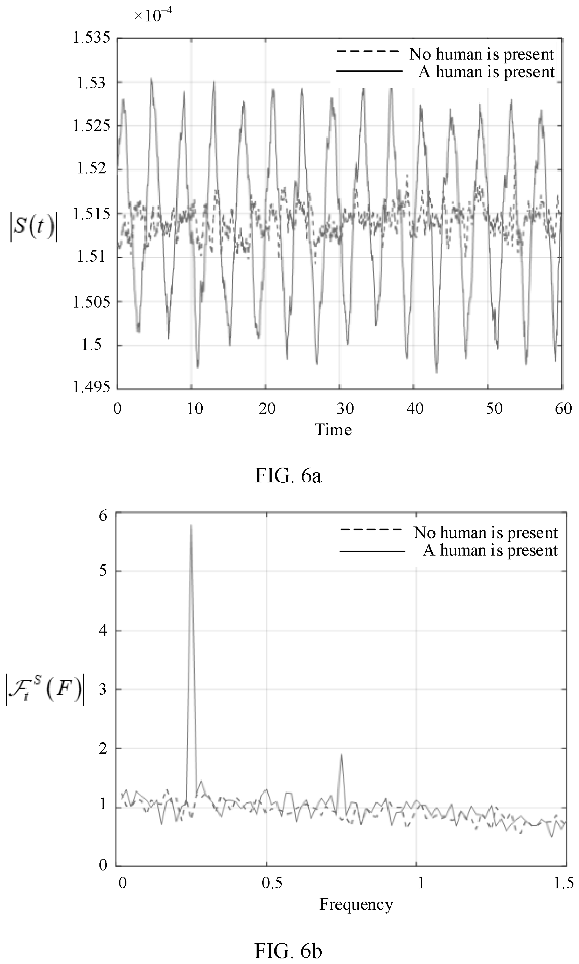

In the human presence detection scenario, after a sensing signal is processed by using the obfuscation function designed in this application, channel measurement results obtained by an authorized user are shown in FIG. 6a and FIG. 6b. FIG. 6a is a magnitude of a time-domain waveform of S(t), and FIG. 6b is a magnitude of a spectrum corresponding to S(t). It can be learned from FIG. 6a and FIG. 6b that, in two scenarios in which a human is present and no human is present, a variation pattern of the magnitude of the time-domain waveform of S(t) obtained through measurement is completely different from a variation pattern of the magnitude of the spectrum corresponding to S(t). Therefore, the authorized user may determine, based on a difference between the channel measurement results obtained in the scenario in which a human is present and the scenario in which no human is present, whether a human is present in the current environment.

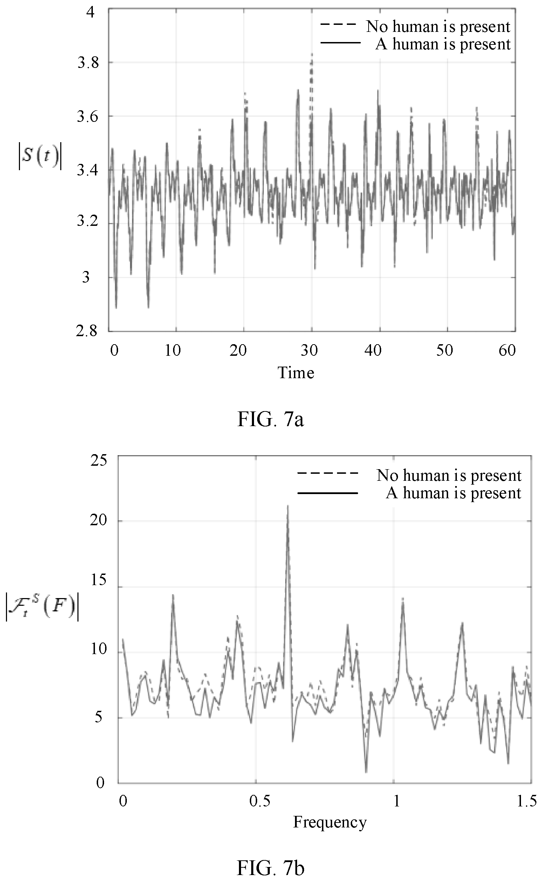

In the human presence detection scenario, after a sensing signal is processed by using the obfuscation function designed in this application, channel measurement results obtained by the unauthorized device are shown in FIG. 7a and FIG. 7b. FIG. 7a is a magnitude of a time-domain waveform of S(t), and FIG. 7b is a magnitude of a spectrum corresponding to S(t). It can be learned from FIG. 7a and FIG. 7b that, in two scenarios in which a human is present and no human is present, it is difficult to distinguish between a variation pattern of the magnitude of the time-domain waveform of S(t) obtained through measurement and a variation pattern of the magnitude of the spectrum corresponding to S(t). In this case, the unauthorized device cannot determine, based on the channel measurement results obtained in the scenario in which a human is present and the scenario in which no human is present, whether a human is present in a current environment.

With reference to FIG. 6a, FIG. 6b, FIG. 7a, and FIG. 7b, it can be learned that, in this application, the obfuscation function designed for the human presence detection scenario can protect user information without affecting sensing performance of the authorized user.

3. The scenario to be sensed is the activity recognition scenario.

The following may be obtained by setting $\frac{1 + {Ra}_{2} \left(t\right) {e}^{jθ \left(t\right)}}{1 + {Ra}_{3} \left(t\right) {e}^{jθ \left(t\right)}} = A \left(t\right)$ in the foregoing Formula (9): $S \left(t\right) = {Ra}_{1} \left(t\right) ⋅ A \left(t\right)$

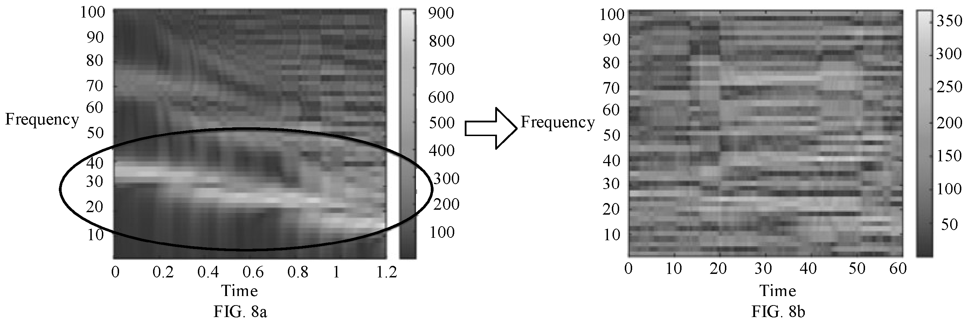

In the activity recognition scenario, to protect user privacy, a spectrum of *A*(*t*) in the foregoing Formula (19) needs to be capable of obfuscating a spectrum of *Ra*₁(*t*)*.* To be specific, after the spectrum of *A*(*t*) is convolved with the spectrum of *Ra*₁(*t*), an impulse with high energy in *Ra*₁(*t*) needs to be dispersed over a frequency range (as shown in FIG. 8a and FIG. 8b).

*A*(*t*) is a composite function. Therefore, a bandwidth of *A*(*t*) is determined by a function that changes the fastest in the composite function. In this application, to enable a feature of the spectrum of *A*(*t*) to satisfy the foregoing condition (to be specific, after the spectrum of *A*(*t*) is convolved with the spectrum of *Ra*₁(*t*)*,* the impulse with high energy in *Ra*₁(*t*) needs to be dispersed over the frequency range), *θ*(*t*) should be a function that changes fastest among functions included in *A*(*t*); or if *θ*(*t*) is not a function that changes fastest among functions included in *A*(*t*), the bandwidth of *A*(*t*) is determined by a function *Ra*₂(*t*) or a function *Ra*₃(*t*)*.* In addition, *Ra*₂(t) or *Ra*₃(*t*) is caused by movement of an object in an environment, so that the bandwidth may be extremely narrow. This may not achieve a spectral dispersion effect on *Ra*₁(*t*)*.* Therefore, the bandwidth of the selected obfuscation function *θ*(*t*) should be greater than a maximum value *F*ₘₐₓ of maximum Doppler frequency shifts caused by all actions to be recognized.

Based on the foregoing requirement on the bandwidth of the obfuscation function *θ*(*t*), the following describes a method for determining the obfuscation function. The method may include the following step 1 to step 4:
Step 1: Assuming that an entire sensing process includes M sensing rounds, and a duration interval of each sensing round is Δ*t*, total duration of the entire sensing process is (M* Δ*t*)*.* That is, duration of the obfuscation function *θ*(*t*) is (M* Δ*t*)*.*
Step 2: Randomly generate S uniformly distributed random numbers that are in a range of 0 to 2π, where a time interval corresponding to adjacent random numbers is $\frac{\left(M-1\right) Δ t}{S - 1}$.
   S satisfies $\frac{\left(M-1\right) Δ t}{S - 1} = \frac{1}{{αF}_{max}}$ (a is a number greater than 0 and less than 1). *Fₘₐₓ* indicates a maximum value of maximum Doppler frequency shifts caused by all actions to be recognized. A specific value is determined by an application scenario and a carrier frequency, and usually does not exceed hundreds of hertz. Because a time interval between every two adjacent random numbers in the S random numbers is $\frac{\left(M-1\right) Δ t}{S - 1}$, it may be considered that the S random numbers are samples of the obfuscation function *θ*(*t*) at moments 0, $\frac{\left(M-1\right) Δ t}{S - 1} , \frac{2 \left(M-1\right) Δ t}{S - 1} , … , \frac{\left(S-2\right) \left(M-1\right) Δ t}{S - 1}$ , (*M-*1)Δ*t*, and the like.
Step 3: For the S random numbers, determine a function obtained by performing interpolation by using a piecewise interpolation algorithm as the obfuscation function *θ*(*t*), where if *θ*(*t*) is greater than 2π, *θ*(*t*) is set to 2π; or if *θ*(*t*) is less than 0, *θ*(*t*) is set to 0.
Step 4: Sample *θ*(*t*) obtained in step 3 at an interval of Δ*t*, to obtain a group of samples *θ*(mΔ*t*), where *θ*(*m*Δ*t*) is an obfuscation function used in an m^{th} sensing round.

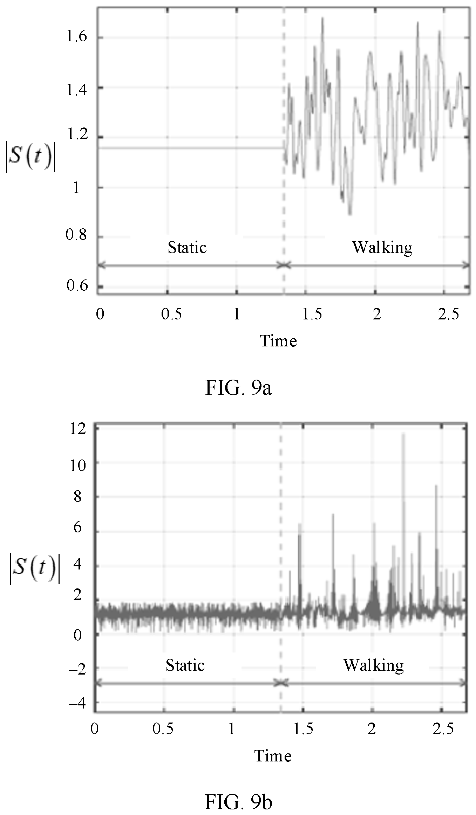

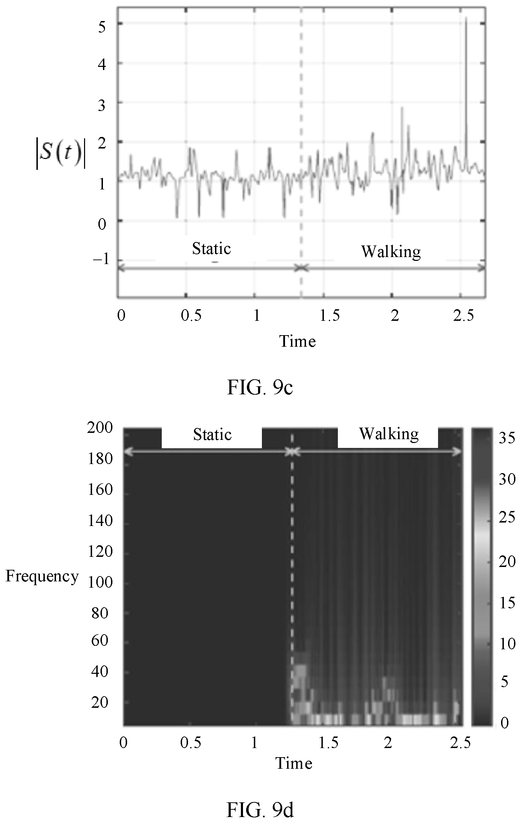

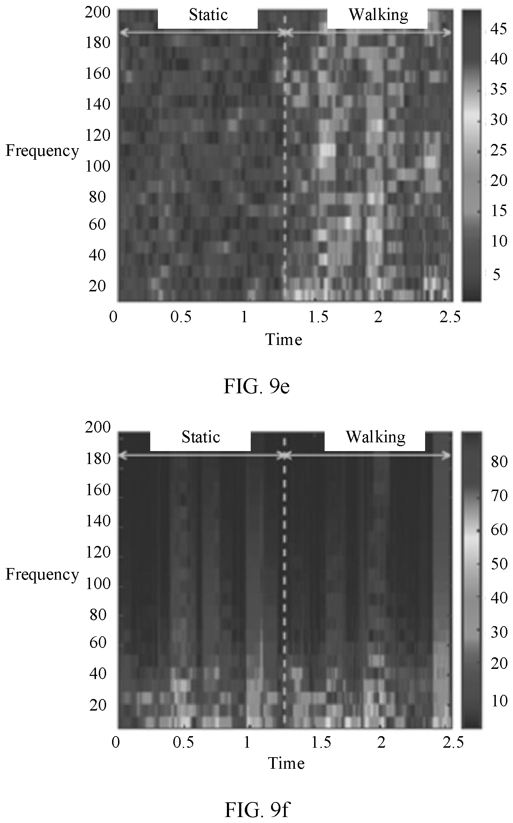

FIG. 9 a to FIG. 9f are diagrams of impact of an obfuscation function designed for an activity recognition scenario on a sensing result. FIG. 9a and FIG. 9d respectively show a magnitude of a time-domain waveform of S(t) and a magnitude of a spectrum corresponding to S(t) when *θ*(*t*) *=* 0, and *θ*(*t*) *=* 0 means that the first apparatus does not use an obfuscation function to process sensing signals. When *θ*(*t*) *=* 0, it can be learned from a feature of the magnitude of the spectrum shown in FIG. 9d that the unauthorized device may accurately distinguish between two actions: static and walking.

FIG. 9b and FIG. 9e respectively show a magnitude of a time-domain waveform of S(t) and a magnitude of a spectrum corresponding to S(t) when *θ*(*t*) is set to a uniformly distributed random number in (0, 2π). When *θ*(*t*) is set to the uniformly distributed random number in (0, 2π), it can be learned from a feature of the magnitude of the time-domain waveform shown in FIG. 9b and a feature of the magnitude of the spectrum shown in FIG. 9e that, in the two actions: static and walking, there are still apparent differences in time-domain waveforms and time-frequency spectra of S(t). The unauthorized device may distinguish between the two actions: static and walking, and user privacy cannot be protected.

FIG. 9c and FIG. 9f respectively show a magnitude of a time-domain waveform of S(t) and a magnitude of a spectrum corresponding to S(t) when a permutation function is the obfuscation function designed in this application. It can be learned from the magnitude of the time-domain waveform shown in FIG. 9c and the magnitude of the spectrum shown FIG. 9f that, in two actions: static and walking, both the time-domain waveforms and the spectra of S(t) cannot be distinguished. Because an obfuscation function is unknown to an unauthorized device, the two actions: static and walking cannot be distinguished, thereby protecting user privacy.

In conclusion, the user privacy can be protected by using the obfuscation function designed for the activity recognition scenario in this application.

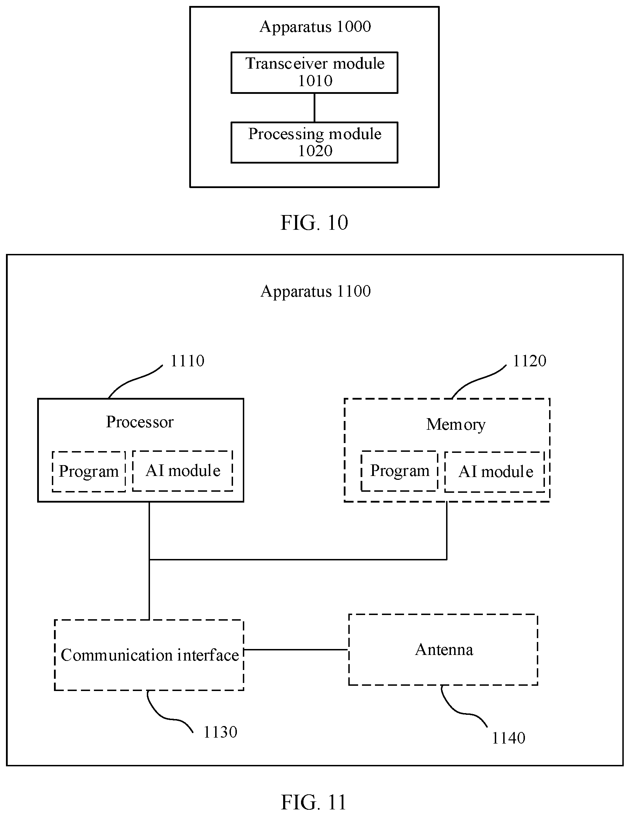

The foregoing describes in detail the method provided in this application with reference to FIG. 1 to FIG. 9f. The following describes an apparatus provided in this application with reference to FIG. 10 and FIG. 11.

FIG. 10 and FIG. 11 are diagrams of possible apparatuses according to embodiments of this application. These apparatuses may be configured to implement the functions of the first apparatus or the second apparatus in the foregoing method embodiments, and therefore may also implement beneficial effects of the foregoing method embodiments.

FIG. 10 is a block diagram of an apparatus according to an embodiment of this application. As shown in FIG. 10, the apparatus 1000 includes a transceiver module 1010 and a processing module 1020.

In a possible design, the apparatus 1000 is configured to implement functions of the first apparatus in the method embodiments shown in FIG. 3 and FIG. 4.

For example, the processing module 1020 is configured to: determine a type of a target obfuscation function corresponding to a first sensing scenario and a parameter included in the target obfuscation function; generate a first signal and a second signal, where the second signal is obtained by applying the target obfuscation function to perform phase adjustment on the first signal, and the target obfuscation function is determined based on the type of the target obfuscation function and the parameter; and output the first signal and the second signal, where the first signal is sent through a first antenna corresponding to the first apparatus, and the second signal is sent through a second antenna corresponding to the first apparatus.

In another possible design, the apparatus 1000 is configured to implement functions of the second apparatus in the method embodiments shown in FIG. 3 and FIG. 4.

For example, the processing module 1020 is configured to: determine a type of a target obfuscation function corresponding to a first sensing scenario and a parameter included in the target obfuscation function; and obtain a sensing result based on the target obfuscation function and a signal received from a first apparatus, where the target obfuscation function is determined based on the type of the target obfuscation function and the parameter.

Optionally, the transceiver module 1010 is configured to send or receive first information, where the first information indicates the type of the target obfuscation function.

Optionally, the transceiver module 1010 is further configured to send or receive second information, where the second information indicates the parameter.

Optionally, the transceiver module 1010 is further configured to send or receive third information, where the third information indicates a generation algorithm for the parameter.

Optionally, the transceiver module 1010 is further configured to send or receive fourth information, where the fourth information indicates that a scenario to be sensed is the first sensing scenario.

Optionally, the processing module 1020 is further configured to obtain the target obfuscation function based on the type of the target obfuscation function and the parameter.

For more detailed descriptions of the transceiver module 1010 and the processing module 1020, directly refer to related descriptions in embodiments shown in FIG. 3 and FIG. 4. Details are not described herein again.

It should be noted that the apparatus 1000 may include a sending module, but does not include a receiving module. Alternatively, the apparatus 1000 may include a receiving module, but does not include a sending module. This may be specifically determined based on whether the foregoing solution performed by the apparatus 1000 includes a sending action and a receiving action. It may be understood that because the apparatus 1000 has a communication function, the apparatus 1000 may also be referred to as a communication apparatus.

FIG. 11 is another block diagram of an apparatus according to an embodiment of this application. As shown in FIG. 11, the apparatus 1100 includes one or more processors 1110. The processor 1110 may be a general-purpose processor, a dedicated processor, or the like, for example, may be a baseband processor or a central processing unit. The baseband processor may be configured to process a communication protocol and communication data. The central processing unit may be configured to control the apparatus (for example, the first apparatus, the second apparatus, or the chip), execute a software program, and process data of the software program.

Optionally, in a design, the processor 1110 may include a program (which may also be sometimes referred to as code or instructions), and the program may be run on the processor 1110, to cause the apparatus 1100 to perform the method performed by the first apparatus or the second apparatus in the foregoing method embodiments. In another possible design, the apparatus 1100 includes a circuit (not shown in FIG. 11), and the circuit is configured to implement functions of the first apparatus or the second apparatus in the foregoing method embodiments.

For example, the processor 1110 may be configured to execute a computer program or instructions in a memory, to implement steps performed by the first apparatus or the second apparatus in the method embodiment shown in any one of embodiments shown in FIG. 3 and FIG. 4.

Optionally, the apparatus 1100 may include one or more memories 1120, and the memory 1120 stores a program (which may also be sometimes referred to as code or instructions). The program may be run on the processor 1110, to cause the apparatus 1100 to perform the method performed by the first apparatus or the second apparatus in the foregoing embodiments.

Optionally, the processor 1110 and/or the memory 1120 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 1110 and/or the memory 1120 may further store data. The processor and the memory may be separately disposed, or may be integrated together.

Optionally, the apparatus 1100 may further include a communication interface 1130. The processor 1110 may also be sometimes referred to as a processing unit, and controls an apparatus (for example, the first apparatus or the second apparatus). The communication interface 1130 may also be sometimes referred to as a transceiver unit, a transceiver machine, a transceiver circuit, a transceiver, or the like, and is configured to implement a transceiver function of the apparatus through an antenna 1140.

Optionally, the apparatus 1100 further includes a communication interface 1130. The processor 1110 and the communication interface 1130 are coupled to each other. It may be understood that the communication interface 1130 may be a transceiver or an input/output interface.

It may be understood that because the apparatus 1100 has a communication function, the apparatus 1100 may also be referred to as a communication apparatus.

When the apparatus 1100 is configured to implement the method in FIG. 3, the processor 1110 is configured to perform functions of the foregoing processing unit, and the communication interface 1130 is configured to perform functions of the foregoing transceiver module. Whether the communication interface 1130 is used for sending or receiving may be specifically determined based on whether the apparatus 1100 is configured to perform a sending action or a receiving action in the solution performed by the apparatus 1100.

It may be understood that when the apparatus 1100 is the first apparatus or the second apparatus, the communication interface 1130 may be a transceiver, and may specifically include a transmitter and a receiver. The transmitter is configured to send a signal, and the receiver is configured to receive a signal. When the apparatus 1100 is a chip used in the first apparatus or the second apparatus, the communication interface 1130 may be an input/output circuit. The input circuit may be configured to perform receiving, and the output interface may be configured to perform sending.

It should be noted that, the foregoing method embodiments may be applied to a processor, or implemented by a processor. The processor may be an integrated circuit chip and has a signal processing capability. In an implementation process, steps in the foregoing method embodiments can be implemented by using a hardware integrated logic circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium storing a computer program. When the computer program is executed by a computer, a function in the foregoing method embodiments is implemented.

This application further provides a computer program product including instructions. When the computer program product is executed by a computer, a function in the foregoing method embodiments is implemented.

All or some of the methods provided in the foregoing embodiments may be implemented by software, hardware, firmware, or any combination thereof. When software is used to implement embodiments, all or a part of embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first apparatus, wherein the method comprises:
determining a type of a target obfuscation function corresponding to a first sensing scenario and a parameter comprised in the target obfuscation function;
generating a first signal and a second signal, wherein the second signal is obtained by applying the target obfuscation function to perform phase adjustment on the first signal, and the target obfuscation function is determined based on the type of the target obfuscation function and the parameter; and
outputting the first signal and the second signal, wherein the first signal is sent through a first antenna corresponding to the first apparatus, and the second signal is sent through a second antenna corresponding to the first apparatus.

2. The method according to claim 1, wherein a ratio of the first signal to the second signal is in proportional to *e*^{*jθ*(*t*)}*,* or a ratio of the first signal to the second signal is inversely proportional to *e*^{*jθ*(*t*)}*,* and *θ*(*t*) is the target obfuscation function.

3. The method according to claim 1 or 2, further comprising:
sending or receiving first information, wherein the first information indicates the type of the target obfuscation function.

4. The method according to any one of claims 1 to 3, further comprising:
sending or receiving second information, wherein the second information indicates the parameter.

5. The method according to any one of claims 1 to 3, further comprising:
sending or receiving third information, wherein the third information indicates a generation algorithm for the parameter.

6. The method according to any one of claims 1 to 5, further comprising:
sending or receiving fourth information, wherein the fourth information indicates that a scenario to be sensed is the first sensing scenario.

7. A communication method, applied to a second apparatus, and comprising:
determining a type of a target obfuscation function corresponding to a first sensing scenario and a parameter comprised in the target obfuscation function; and
obtaining a sensing result based on the target obfuscation function and a signal received from a first apparatus, wherein the target obfuscation function is determined based on the type of the target obfuscation function and the parameter.

8. The method according to claim 7, further comprising:
receiving or sending first information, wherein the first information indicates the type of the target obfuscation function.

9. The method according to claim 7 or 8, further comprising:
receiving or sending second information, wherein the second information indicates the parameter.

10. The method according to claim 7 or 8, further comprising:
receiving or sending third information, wherein the third information indicates a generation algorithm for the parameter.

11. The method according to any one of claims 7 to 10, further comprising:
receiving or sending fourth information, wherein the fourth information indicates that a scenario to be sensed is the first sensing scenario.

12. The method according to any one of claims 1 to 11, wherein the first sensing scenario is one of the following sensing scenarios: a physiological feature detection scenario, a biological presence detection scenario, and an activity recognition scenario, wherein the physiological feature detection scenario is a scenario for detecting a physiological feature parameter, the biological presence detection scenario is a scenario for detecting whether a biological entity is present in an environment, and the activity recognition scenario is a scenario for detecting a biological activity.

13. The method according to claim 12, wherein the type of the target obfuscation function is one of a plurality of random functions: a sine function, a linear combination of sine functions, a double sine function, a linear combination of two groups of sine functions, or a function obtained by interpolating S random numbers based on an interpolation algorithm, wherein S is an integer greater than 1.

14. The method according to claim 13, wherein the first sensing scenario is the physiological feature detection scenario, the function type of the target obfuscation function is the sine function, the parameter comprises a frequency of the sine function, and the frequency of the sine function is within a frequency range corresponding to a physiological activity.

15. The method according to claim 14, wherein the target obfuscation function *θ*(*t*) satisfies: $θ \left(t\right) = π cos 2 {πF}_{q} t ,$ wherein
*F_{q}* ∈ [*F*_{*l*1},*F*_{*l*2}], [*F*_{*l*1},*F*_{*l*2}] represents the frequency range corresponding to the physiological activity, and *F_{q}* is a frequency value randomly selected from [*F*_{*l*1},*F*_{*l*2}].

16. The method according to claim 13, wherein the first sensing scenario is the physiological feature detection scenario, the type of the target obfuscation function is the linear combination of sine functions, the parameter comprises a frequency of each sine function in the linear combination of sine functions and a quantity of sine functions comprised in the linear combination of sine functions, and the frequency of each sine function is within a frequency range corresponding to a physiological activity.

17. The method according to claim 16, wherein the target obfuscation function *θ*(*t*) satisfies: $θ \left(t\right) = {\sum }_{i = 1}^{{n}_{a}} {q}_{{F}_{qi}} cos \left(2{πF}_{qi}t\right) ,$ wherein
*F_{qi}* E [*F*_{*l*1},*F*_{*l*2}], [*F*_{*l*1},*F*_{*l*2}] represents the frequency range corresponding to the physiological activity, *F_{qi}* is a frequency value randomly selected from the frequency range [*F*_{*l*1},*F*_{*l*2}], *q_{F_{qi}}* is a non-zero real number, and *nₐ* is an integer greater than 1.

18. The method according to claim 13, wherein the first sensing scenario is the biological presence detection scenario, the type of the target obfuscation function is the double sine function, the double sine function comprises a first sine function and a second sine function, the parameter comprises a frequency of the first sine function and a frequency of the second sine function, the frequency of the first sine function is within a frequency range corresponding to respiration, and the frequency of the second sine function is within a frequency range corresponding to heartbeat.

19. The method according to claim 18, wherein the target obfuscation function *θ*(*t*) satisfies: $θ \left(t\right) = {q}_{{F}_{a 1}} cos 2 {πF}_{a 1} t + {q}_{{F}_{b 1}} cos 2 {πF}_{b 1} t ,$ wherein
*F*_{*a*1} E [*F*_{*m*1},*F*_{*m*2}], [*F*_{*m*1},*F*_{*m*2}] represents the frequency range corresponding to respiration, *F*_{*a*1} is a frequency value randomly selected from the frequency range [*F*_{*m*1},*F*_{*m*2}], *F*_{b1} ∈ [F_{*n*1},F_{*n*2}], [F_{*n*1},F_{*n*2}] represents the frequency range corresponding to heartbeat, *F*_{*b*1} is a frequency value randomly selected from the frequency range [F_{*n*1},*F*_{*n*2}], and both *q*_{*F*ₐ₁} and *q*_{*F*_{b1}} are non-zero real numbers.

20. The method according to claim 13, wherein the first sensing scenario is the biological presence detection scenario, the type of the target obfuscation function is the linear combination of two groups of sine functions, and the parameter comprises a frequency of each sine function in the linear combination of two groups of sine functions and a quantity of sine functions comprised in each group of sine functions; and
the linear combination of two groups of sine functions comprises a first group of sine functions and a second group of sine functions, a frequency of each sine function in the first group of sine functions is within a frequency range corresponding to respiration, and a frequency of each sine function in the second group of sine functions is within a frequency range corresponding to heartbeat.

21. The method according to claim 20, wherein the target obfuscation function *θ*(*t*) satisfies: $θ \left(t\right) = {\sum }_{i = 1}^{{n}_{a}} {q}_{{F}_{ai}} cos \left(2{πF}_{ai}t\right) + {\sum }_{i = 1}^{{n}_{b}} {q}_{{F}_{bi}} cos \left(2{πF}_{bi}t\right) ,$ wherein
*Fₐᵢ* E [*F*_{*m*1},*F*_{*m*2}], [*F*_{*m*1},*F*_{*m*2}] represents the frequency range corresponding to respiration, *Fₐᵢ* is a frequency value randomly selected from [*F*_{*m*1},*F*_{*m*2}], *F_{bi}* E [*F*_{*n*1},*F*_{*n*2}], [*F*_{*n*1},*F*_{*n*2}] represents the frequency range corresponding to heartbeat, *F_{bi}* is a frequency value randomly selected from the frequency range [*F*_{*n*1}, *F*_{*n*2}], both *q_{Fₐᵢ}* and *q_{F_{bi}}* are non-zero real numbers, both *nₐ* and *n_{b}* are integers greater than 1, and both *φₐᵢ* and *φ_{bi}* are real numbers.

22. The method according to claim 13, wherein the first sensing scenario is the activity recognition scenario, the type of the target obfuscation function is the function obtained by interpolating the S random numbers based on the interpolation algorithm, the parameter is the S random numbers, and S is an integer greater than 1.

23. The method according to claim 22, wherein S satisfies: $\frac{\left(M-1\right) Δ t}{S - 1} = \frac{1}{{αF}_{max}} ,$ wherein
*F*ₘₐₓ is a maximum value of maximum Doppler frequency shifts caused by all actions to be recognized, M is a quantity of sensing rounds, Δ*t* is a duration of each sensing round, α is a number greater than 0 and less than 1, and M is an integer greater than 1.

24. A communication apparatus, comprising a module configured to implement the method according to any one of claims 1 to 23.

25. A communication apparatus, comprising a processor configured to cause, by executing a computer program and/or by using a logic circuit, the communication apparatus to implement the method according to any one of claims 1 to 23.

26. The apparatus according to claim 25, further comprising a memory configured to store a computer program and/or a configuration file of the logic circuit.

27. The apparatus according to claim 25 or 26, further comprising a communication interface configured to input and/or output a signal.

28. A computer-readable storage medium, wherein the computer-readable storage medium stores a computer program, and when the computer program is executed by a processor, the method according to any one of claims 1 to 23 is performed.

29. A computer program product, comprising a computer program, wherein when the computer program is run, the method according to any one of claims 1 to 23 is performed.

30. A communication system, comprising a first apparatus and a second apparatus, wherein the first apparatus is configured to implement the method according to any one of claims 1 to 23.
